(19) Europäisches Patentamt
European Patent Office
Office européen des brevets

(11) **EP 3 264 396 B1**

(12) **EUROPEAN PATENT SPECIFICATION**

(45) Date of publication and mention
of the grant of the patent:
**26.01.2022 Bulletin 2022/04**

(21) Application number: **16176718.1**

(22) Date of filing: **28.06.2016**

(51) International Patent Classification (IPC):
**G09C 1/00** (2006.01)    **H04L 9/00** (2022.01)

(52) Cooperative Patent Classification (CPC):
**G09C 1/00; H04L 9/003;** H04L 2209/043;
H04L 2209/046

(54) **A METHOD FOR PROTECTING A SUBSTITUTION OPERATION USING A SUBSTITUTION TABLE AGAINST A SIDE-CHANNEL ANALYSIS**

VERFAHREN ZUM SCHUTZ EINES SUBSTITUTIONSVORGANGS UNTER VERWENDUNG EINES SUBSTITUTIONSTISCHS GEGEN EINE SEITENKANALANALYSE

PROCÉDÉ DE PROTECTION D'UNE OPÉRATION DE SUBSTITUTION À L'AIDE D'UNE TABLE DE SUBSTITUTION CONTRE UNE ANALYSE DE CANAUX AUXILIAIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.01.2018 Bulletin 2018/01**

(73) Proprietor: **ESHARD
33650 Martillac (FR)**

(72) Inventors:
• **WURCKER, Antoine
33140 VILLENAVE D'ORNON (FR)**
• **CLAVIER, Christophe
87800 Rilhac Lastours (FR)**

(74) Representative: **de Roquemaurel, Bruno et al
OMNIPAT
24 Place des Martyrs de la Résistance
13100 Aix en Provence (FR)**

(56) References cited:
**EP-A2- 1 267 514    US-A1- 2001 053 220**

• **KOUICHI ITOH ET AL: "DPA Countermeasure Based on the Masking Method", PROCEEDINGS OF ICICS. INTERNATIONAL CONFERENCE ON INFORMATIONCOMMUNICATIONS AND SIGNAL PROCESSING, XX, XX, 6 December 2001 (2001-12-06), pages 440-456, XP002297044,**
• **Nicolas Bruneau ET AL: "Multi-variate High-Order Attacks of Shuffled Tables Recomputation", , 28 August 2015 (2015-08-28), XP055271179, ISBN: 978-3-662-48324-4 Retrieved from the Internet: URL:http://eprint.iacr.org/2015/837.pdf[retrieved on 2016-05-09]**
• **JEAN-SEBASTIEN CORON: "Higher Order Masking of Look-up Tables", INTERNATIONAL ASSOCIATION FOR CRYPTOLOGIC RESEARCH,, vol. 20140205:092212, 5 February 2014 (2014-02-05), pages 1-21, XP061015352, [retrieved on 2014-02-05]**
• **KAI SCHRAMM ET AL: "Higher Order Masking of the AES", 1 January 2005 (2005-01-01), TOPICS IN CRYPTOLOGY - CT-RSA 2006 : THE CRYPTOGRAPHERS' TRACK AT THE RSA CONFERENCE 2006, SAN JOSE, CA, USA, FEBRUARY 13-17, 2006 ; PROCEEDINGS; [LECTURE NOTES IN COMPUTER SCIENCE], SPRINGER, BERLIN, DE, PAGE(S) 208 - 225, XP019026783, ISBN: 978-3-540-31033-4**

**Description**

TECHNICAL FIELD

The present invention relates to a method and device for protecting a circuit or a program against side channel analyses aiming to discover the value of a secret data handled by the circuit or program, and in particular a secret key used by an encryption or decryption algorithm to transform a message.

The present invention relates in particular to smart card integrated circuits or to hardware cryptographic components integrated onto mother boards of computers and other electronic and IT equipment (USB drives, TV decoders, game consoles, etc.) implementing a cryptographic algorithm such as AES (Advanced Encryption Standard). The present invention also relates to a program implementing such an algorithm, provided for being executed in a secure or non-secured environment.

More generally the present invention relates to circuits and software implementing a substitution operation using an input data as an index to select an output data in a substitution table, the input and output data and the substitution table being required to be kept hidden. Such a substitution operation is implemented in several cryptographic algorithms such as AES (Advanced Encryption Standard), DES (Data Encryption Standard), Triple DES, TwoFish, PRIDE, ARIA and SEED.

BACKGROUND

Circuits implementing cryptographic algorithms can comprise a central processing unit (CPU), and possibly a circuit dedicated to cryptographic computing, for example a cryptographic coprocessor. These circuits may comprise thousands of logic gates that switch differently according to the operations executed. These switching operations create short variations in current consumption, for example of a few nanoseconds, and those variations can be measured. In particular, CMOS-type integrated circuits comprise logic gates that only consume current when they switch, i.e. when a logic node changes its state to 1 or to 0. Therefore, the current consumption depends on the data handled by the central processing unit and on its various peripherals: memory, data flowing on the data or address bus, cryptographic coprocessor, etc.

Furthermore, certain software programs using encryption or obfuscation techniques, such as the White-box Cryptography technique, may integrate secret data in such a way that it is very difficult to determine them by reverse engineering. Certain software programs may also receive a secret data from outside through a secure communication channel.

Such circuits may be subjected to so-called side channel analysis attacks based on observing their current consumption, or their magnetic or electromagnetic radiation. Such attacks aim to discover secret data, in particular encryption keys. The most frequent side channel attacks implement statistical analysis methods such as SPA ("Single Power Analysis"), DPA ("Differential Power Analysis"), CPA ("Correlation Power Analysis") or EMA ("ElectroMagnetic Analysis"). The SPA analysis (ref. [1]) normally only requires the acquisition of a single current consumption trace. It aims to obtain information about the activity of the integrated circuit by observing the part of the consumption trace corresponding to a cryptographic computation, since the current trace varies according to the operations executed and the data handled.

Software may also undergo such side channel attacks during their execution by a circuit.

DPA (ref. [2]) and CPA analyses enable the key of an encryption algorithm to be found by acquiring numerous circuit consumption traces and by statistically analyzing these traces to find the target information. They are based on the premise that the consumption of a CMOS-type integrated circuit varies when a bit changes from 0 to 1 in a register or on a bus, and does not vary when a bit remains equal to 0, remains equal to 1 or changes from 1 to 0 (discharge of a stray capacitance of a MOS transistor). Alternatively, it can be considered that the consumption of a CMOS-type integrated circuit varies when a bit changes from 0 to 1 or changes from 1 to 0 and does not vary when a bit remains equal to 0 or remains equal to 1. This second hypothesis enables the conventional "Hamming distance" or "Hamming weight" functions to be used in order to develop a consumption model that does not require knowledge of the structure of the integrated circuit in order to be applicable. The DPA analysis involves amplifying this consumption difference thanks to statistical processing on numerous consumption traces, aiming to highlight a measurement difference between two families of consumption traces distinguished according to formulated hypotheses.

The CPA analysis (ref. [3]) is based on a linear current consumption model and involves computing a correlation coefficient between, firstly, the consumption points measured that form the captured consumption traces and, secondly, an estimated consumption value, computed from the linear consumption model and a hypothesis on the data to be discovered that is handled by the microcircuit and on the value of the encryption key.

The electromagnetic analysis (EMA) is based on the principle that an integrated circuit may send information in the form of near or far field electromagnetic radiation. Given that transistors and the wires connecting them emit

2

electromagnetic signals when their state changes, these signals can be treated like the current consumption variation signals by an analysis such as one or other of the SPA, DPA and CPA analyses. An example of application of this analysis was made by Jean-Jacques Quisquater in 2001 (ref [4]).

Other side channel analyses exist, such as "Template analysis" (ref. [5]) and "Mutual Information Analysis" (MIA) (ref. [6]). All of the above-mentioned analyses are based on a time alignment of all the analyzed traces. In other words, all the measurements performed at a given time, for example from the time the execution of a command is activated by the circuit, must correspond to the same data handled by the algorithm.

The patent application N° FR 16 51443 filed by the Applicant on February 22, 2016 discloses a method for analysing traces representative of the activity of a circuit when the latter executes an operation successively on different input data. This method comprises extracting a part of each trace, and generating a histogram from each extracted trace part, by counting an occurrence number of each possible value appearing in each of the extracted parts of these traces. Partial results of the operation are then computed by applying the operation to each input data and to each possible value of a part of a secret key involved in the operation. Then, the method identifies for each possible part value of the secret key, all the input data which provide the same partial result. For each possible part value of the secret key, the occurrence numbers in the histograms, corresponding to the identified input data and the part value of the secret key are then added. The part of the secret key can be determined by subjecting the added occurrence numbers to a statistical analysis. The statistical analysis assumes that if a value related to the secret key has leaked in the extracted parts of the traces, it can be highlighted by the added occurrence numbers.

It may be desirable to protect an integrated circuit or a software program against one or more of these side channel analyses. It may be desirable in particular to protect substitution operations using a substitution table performed in a cryptographic algorithm such as AES.

The patent applications EP 1 267 514 and US 2001/053220, and the publications "DPA Countermeasure Based on the Masking Method", Kouichi Itoh et al., and "Multi-variate High-Order Attacks of Shuffled Tables Recomputation", Nicolas Bruneau et al. disclose countermeasures for protecting substitution operations using an input data as an index to select an output value of the substitution operation in a substitution table. These countermeasures comprise steps of generating masked tables in which the values of the original substitution tables are masked and stored at masked index values. However, these countermeasures do not resist to the above analysis disclosed by the Applicant.

The publication "High Order Masking of the AES", Kai Schramm and Christof Paar, discloses a solution based on incremental SBox recomputation that requires to keep all the increments used.

SUMMARY

A method is described for executing by a circuit a substitution operation whereby an output data is selected in a substitution table using an input data as an index. According to an embodiment, the substitution operation is performed using a masked substitution table, the input data being combined by Exclusive OR (XOR) operations with a first mask, and the output data being combined by XOR operations with a second mask. According to the invention, the masked substitution table is generated by performing a plurality of successive iterations, a first iteration of the plurality of iterations comprising generating a masked substitution table from the original substitution table, each of subsequent iterations of the successive iterations after the first iteration comprising generating a next masked substitution table from a previous masked substitution table generated by a previous iteration of the successive iterations, each iteration comprising: selecting a first and a second input mask; computing a next value of a first mask parameter by applying XOR operations to a previous value of the first mask parameter and to the first input mask; computing a next value of a second mask parameter by applying XOR operations to a previous value of the second mask parameter and to the second input mask, the previous values of the first and second mask parameters being set to zero in the first iteration; selecting each value in the previous masked substitution table; and for each selected value: computing a masked value by applying XOR operations to the selected value and to the second input mask, computing a masked index by applying XOR operations to the first mask and to an original index, and storing the masked value in the masked substitution table, the selected value being selected at the original index and the masked value being stored at the masked index, or the selected value being selected at the masked index and the masked value being stored at the original index, the substitution operation being performed using the masked substitution table generated in a last iteration, the substitution operation being applied to the input data combined by XOR operations with the next value of the first mask parameter, computed in the last iteration, the output data of the masked substitution operation being equal to the output data of the substitution operation combined by XOR operations with the next value of the second mask parameter, computed in the last iteration.

According to an embodiment, the new masked substitution table is generated by: selecting third input masks of rank j for each of ranks from j=1 to n, n being an integer number greater than zero, for each rank j from j=1 to n-1, computing a new value of a third mask parameter of rank j by applying XOR operations to the previous value of the third mask parameter of rank j and to the third input masks of ranks j and j+1, and computing a new value of a third mask parameter of rank n by applying XOR operations to a previous value of the third mask parameter of rank n and to the third input mask of rank n, the new value of the first mask parameter being computed by applying XOR operations to the previous value of the first mask parameter, to the third input mask of rank one and to the first input mask, the new value of the second mask parameter being computed by applying XOR operations to the previous value of the second mask parameter, to the third input mask of rank one and to the second input mask, the substitution operation comprising applying XOR operations to the masked input data and to each of the third mask parameters of ranks one to n, the masked output data corresponding to the output data of the substitution operation, combined by XOR operations with the second mask parameter and with each of the third mask parameters of ranks one to n.

According to an embodiment, the new masked substitution table is generated by: selecting third and fourth input masks of rank j, for each of ranks from j=1 to n, n being an integer number greater than zero; for each rank j from j=1 to n-1, computing a new value of a third mask parameter of rank j by applying XOR operations to the previous value of the third mask parameter of rank j and to the third input masks of ranks j and j+1, and computing a new value of a fourth mask parameter of rank j by applying XOR operations to the previous value of fourth mask parameter of rank j and to the fourth input masks of ranks j and j+1; computing a new value of a third mask parameter of rank n by applying XOR operations to a previous value of the third mask parameter of rank n and to the third input mask of rank n; and computing a new value of a fourth mask parameter of rank n by applying XOR operations to a previous value of the fourth mask parameter of rank n and to the fourth input mask of rank n; the new value of the first mask parameter being obtained by applying XOR operations to the previous value of the first mask parameter, to the third input mask of rank one and to the first input mask, the new value of the second mask parameter being obtained by applying XOR operations to the previous value of the second mask parameter, to the fourth input mask of rank one and to the second input mask, the substitution operation comprising applying XOR operations to the masked input data and to each of the third mask parameter of ranks one to n, the masked output data corresponding to the output data of the substitution operation, combined by XOR operations with the second mask parameter and with each of the fourth mask parameters of ranks one to n.

According to an embodiment, the input masks are randomly selected.

According to an embodiment, the data in the masked substitution table are computed in a random order.

Embodiments also relate to a method for encrypting or decrypting an input data according to a cryptographic algorithm comprising a substitution operation, wherein the substitution operation is performed according to the above-defined method.

According to an embodiment, the cryptographic algorithm conforms with the Advanced Encryption Standard (AES), the method comprising: computing a masked input data by applying XOR operations to the input data and to the new value of the first mask parameter; computing a first masked round input data by applying XOR operations to the masked input data and to a first round key; performing several rounds, each comprising: performing a substitution operation applied to a previously computed masked round input data and using the new masked substitution table, computing a masked round input data by applying XOR operations to an output data of an AES column-based permutation operation, to a corresponding round key, and to the new values of the first mask parameter and the second mask parameter; and performing a last round comprising: computing a substitution output data by performing a substitution operation using the new masked substitution table, receiving as input a previously computed masked round input data, and computing a masked output data by applying XOR operations to the masked substitution output data and to a corresponding round key, an output data resulting from processing the input data by the cryptographic algorithm being obtained by applying XOR operations to the masked output data and to the new value of the second mask parameter.

According to an embodiment, the round keys are masked round keys, the method comprising: selecting a third input mask, and computing a new value of a third mask parameter by applying XOR operations to a previous value of the third mask parameter and to the third input mask, the new value computing a masked input data by applying XOR operations to the input data and to the new value of the first mask parameter; computing a first masked round input data by applying XOR operations to the masked input data and to a first round key; performing several rounds, each comprising: performing a substitution operation applied to a previously computed masked round input data and using the new masked substitution table, computing a masked round input data by applying XOR operations to an output data of an AES column-based permutation operation, to a corresponding round key, and to the new values of the first mask parameter and the second mask parameter; and performing a last round comprising: computing a substitution output data by performing a substitution operation using the new masked substitution table, receiving as input a previously computed masked round input data, and computing a masked output data by applying XOR operations to the masked substitution output data and to a corresponding round key, an output data resulting from processing the input data by the cryptographic algorithm being obtained by applying XOR operations to the masked output data and to the new value of the second mask parameter.

According to an embodiment, the round keys are masked round keys, the method comprising: selecting a third input mask, and computing a new value of a third mask parameter by applying XOR operations to a previous value of the third mask parameter and to the third input mask, the new value of the first mask parameter being computed by applying XOR operations to the previous value of the first mask parameter and to the third and first input masks, the new value of the second mask parameter being computed by applying XOR operations to the previous value of the second mask parameter and to the third and second input masks, new masked round keys being each obtained by applying XOR operations to the new value of the third mask parameter and to a previous round key, the new masked substitution table being generated by using the new values of the first and second mask parameters, the substitution operation comprising applying XOR operations to the masked input data and to the new value of the third mask parameter, the masked output data corresponding to the output data of the substitution operation, combined by XOR operations with the second mask parameter and with the new value of the third mask parameter.

According to an embodiment, the cryptographic algorithm conforms with the Data Encryption Standard (DES), the method comprising: performing several rounds, each comprising: computing a masked round data by applying XOR operations to an output data of a DES expansion operation and to the new value of the first mask parameter; performing a substitution operation from the masked round data using new masked substitution tables, the substitution operation providing a masked substitution output data masked by the new value of the second mask parameter, and computing an unmasked substitution output data by applying XOR operations to the masked substitution output data and to the new value of the second parameter.

According to an embodiment, the generation of the new masked substitution tables comprises: selecting a third and a fourth input mask, and computing a new value of a third mask parameter by applying XOR operations to a previous value of the third mask parameter and to the third input mask, the new value of the first mask parameter being computed by applying XOR operations to previous value of the first mask parameter and to the third and first input masks, computing new values of a fourth mask parameter by applying XOR operations to a previous value of the fourth mask parameter and to the fourth input mask, the new value of the second mask parameter being computed by applying XOR operations to the previous value of the second mask parameter and to the fourth and second input masks, computing a transformed first input mask by applying to the first input mask the DES expansion operation; and computing a transformed second input mask by applying a reverse DES permutation operation to the second input mask, the new masked substitution tables being generated using as the first and second input masks the transformed first and second input masks, the method comprising using masked round keys obtained by applying XOR operations to DES round keys and to transformed third and fourth input masks obtained by applying the DES expansion operation to third and fourth input masks, and using the new values of third and fourth mask parameters.

Embodiments also relate to a circuit comprising a processor and configured to implement the above-defined methods.

According to an embodiment, the circuit comprises a coprocessor.

Embodiments also relate to a device comprising the above-defined circuit, arranged on a medium.

Embodiments also relate to a computer program product directly loadable into an internal memory of a computer and comprising code portions which when executed by a computer configure the computer to carry out the steps of the above-defined methods.

BRIEF DESCRIPTION OF THE DRAWINGS

The method and/or device may be better understood with reference to the following drawings and description. Non-limiting and non-exhaustive descriptions are described with the following drawings. In the figures, like referenced signs may refer to like parts throughout the different figures unless otherwise specified.

Figure 1 schematically represents a conventional architecture of a secure circuit;
Figure 2 represents steps of an operation, including protection steps according to prior art;
Figure 2A schematically represents a table transformed by the steps of Figure 2,
Figures 3 and 4 represent protection steps according to one embodiment;
Figure 5 is a block diagram of the AES encryption algorithm, including protection steps according to one embodiment;
Figure 6 is a block diagram of the DES encryption algorithm, including protection steps according to one embodiment;
Figures 7 and 8 represent protection steps, according to another embodiment;
Figures 9 and 10 represent protection steps, according to another embodiment;
Figures 11 and 12 represent protection steps adapted to AES algorithm; according to another embodiment;
Figures 13 and 14 are a block diagram of the AES encryption algorithm, including protection steps according to different embodiments;
Figures 15 and 16 represent protection steps adapted to DES algorithm, according to one embodiment;
Figure 17 is a block diagram of the DES encryption algorithm, including protection steps according to another embodiment;
Figure 18 schematically represents a secure circuit, according to one embodiment.

DETAILED DESCRIPTION

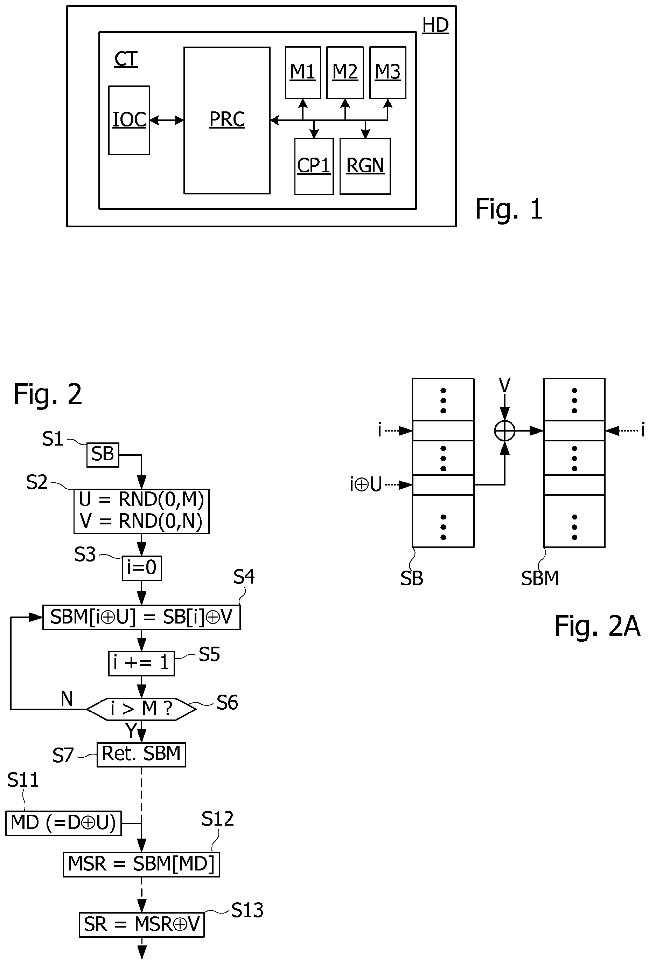

Figure 1 represents, as an example, a secure integrated circuit CT, for example arranged on a portable medium HD such as a plastic card or any other medium, or in a terminal such as a mobile terminal. The integrated circuit comprises a microprocessor PRC, an input/output circuit IOC, memories M1, M2, M3 coupled to the microprocessor by a data and address bus and, optionally, a cryptographic computation coprocessor CP1 or arithmetic accelerator, and a random number generator RGN. The memories can comprise a volatile memory M1, for example a RAM-type ("Random Access Memory") memory containing volatile application data, a non-volatile memory M2, for example an EEPROM or Flash memory, containing non-volatile data and application programs, and possibly a read-only memory (or ROM memory) containing the operating system of the microprocessor. The operating system can be also stored in the non-volatile memory.

The communication interface circuit IOC may be of contact type, for example according to the ISO/IEC 7816 standard, of contactless type with inductive coupling, for example according to the ISO/IEC 14443A/B or ISO/IEC 13693 standard, of contactless type by electrical coupling (UHF interface circuit), or of both contact and contactless type. The interface circuit IOC may also be coupled through a specific interface, to another circuit such as an NFC controller, or a main circuit of a terminal such as a mobile terminal or a connected object.

In some embodiments, the integrated circuit CT may be configured to execute operations of encrypting, decrypting or signing messages that are sent to it, by means of a cryptographic function. This cryptographic function may be executed by the processor PRC of the circuit CT or partially or totally carried out by the processor PRC to the coprocessor CP1.

It is proposed here to protect an operation using a substitution table or a lookup table, e.g. in a cryptographic algorithm, implemented in a circuit such as the circuit CT, against side channel analyses. In this context, the operation receives an input data, and provides an output data read in the table using the input data as an index. A protection of this operation according to prior art consists in masking the substitution table using the property:

$$SBM[D \oplus U] = SB[D] \oplus V, \hspace{3cm} (1)$$

where SB is the substitution table, SBM is the masked substitution table, and U and V are input masks.

Figure 2 represents steps S1 to S7 generating the masked substitution table SBM, and steps S11 to S13 using the masked table in a substitution operation. Figure 2A represents the substitution table SB and the masked table SBM derived from the table SB by executing steps S1 to S7. At step S1, the substitution table SB is input. At step S2, the masks U, V are randomly determined between 0 and maximum values M and N. The value M corresponds with the amount of data in the substitution table SB minus one, and the value N corresponds with the maximum value of the data in the table SB. It should be noted that the values M and N are not necessary the same.

At step S3, an index i is initialized to zero (0). At step S4, the index i is used to select an output data SB[i] in the substitution table SB and the selected output data SB[i] is masked by combining it with the mask V by an XOR operation. The result of the XOR operation SB[i]⊕V is stored in the masked table SBM at an index i⊕U resulting from the combination by an XOR operation of the index i with the mask U. At step S5, the index i is incremented by one (1). At step S6, the index i is compared with the value M. If the index i is greater than the value M, step S7 is executed, otherwise steps S4 to S6 are executed again for a new iteration. At step S7, the masked table SBM is completely defined and provided as output of steps S1 to S7.

In step S11, a masked data MD is used to select an output data SR in the substitution table SB. To that end, the masked data MD results from masking a data D by applying to it an XOR operation with the input mask U. At step S12, the masked data MD is used as an index to select a masked output data MSR in the masked table SBM. At step S13 executed when needed, the masked output data MSR is combined with the mask V by an XOR operation, thereby providing the unmasked output data SR.

It turns out that such a masking protection of a substitution table is not resistant to the previously mentioned analyses combining leakage of the masked data MD and leakage of the input mask U. The masked table computation is more particularly sensitive to such analyses as the masks U and V are to be used many times (M times).

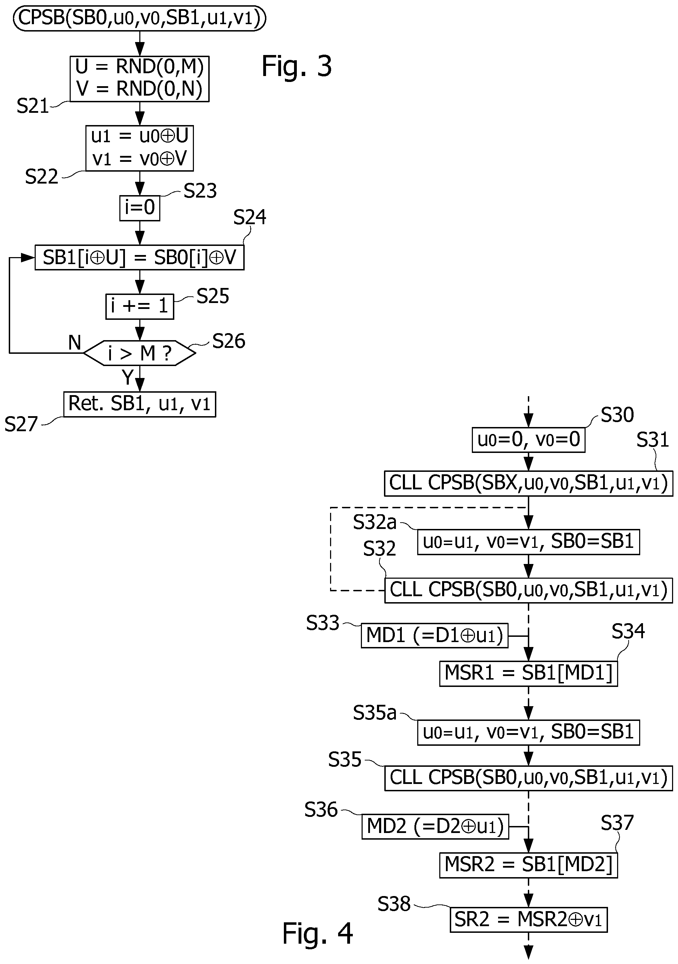

Figure 3 represents steps S21 to S27 of a procedure CPSB generating a masked substitution table SB1 from another substitution table SB0, according to one embodiment. The procedure CPSB receives the substitution table SB0 to be masked and mask parameters u0, v0 and provides a masked table SB1, and updated mask parameters u1, v1. At step S21, input masks U, V are determined between 0 and a maximum value M, N. The maximum value M of the input mask U corresponds with the amount of data in the substitution table SB0 minus one, and the maximum value N of the input mask V corresponds with the maximum value of the data in the table SB0. The masks U, V can be chosen randomly. At step S22, the mask parameters u1, v1 are computed using the input masks U, V and the previous value of the mask parameters u0, v0, as follows:

$$u1 = u0 \oplus U$$
$$v1 = v0 \oplus V \qquad (2)$$

It results from the equation (2) that the parameter u is updated by being masked by the mask U, and the parameter v is updated by being masked by the mask V.

At step S23, an index i is initialized to zero (0). At step S24, the index i is used to select an output data SB0[i] in the substitution table SB0 and the selected output data SB0[i] is masked by combining it with the mask V by an XOR operation. The result of the XOR operation SB0[i]⊕V is stored in the masked table SB1 at an index i⊕U resulting from the combination by an XOR operation of the index i with the input mask U:

$$SB1[i \oplus U] = SB0[i] \oplus V. \qquad (3)$$

At step S25, the index i is incremented by one (1). At step S26, the index i is compared with the value M. If the index i is greater than the value M, step S27 is executed otherwise steps S24 to S26 are executed again for a new iteration. At step S27, the masked table SB1 is completely defined and provided as output of the procedure CPSB with the updated parameters u and v.

It should be observed that the masked table computed at step S24 can be obtained by several others ways, examples of which are defined in the following equations examples:

$$SB1[i] = SB0[i \oplus U] \oplus V. \qquad (4)$$

$$SB1[pr[i] \oplus U] = SB0[pr[i]] \oplus V. \qquad (5)$$

$$SB1[pr[i]] = SB0[pr[i] \oplus U] \oplus V. \qquad (6)$$

where pr[i] represents a permutation over the set of integer numbers {0, ..., M}. In addition the permutation pr can be randomly generated, for example each time the masked table SB1 is computed from a previous table SB0. Thus the permutation pr enables the elements of the masked table SB1 to be computed in a random order.

Figure 4 represents steps S30 to S38 of a procedure using a substitution table SBX, according to one embodiment. This procedure comprises initialization steps S30 to S32. At step S30, the mask parameters u0 and v0, are initialized to zero (0). At step S31, the procedure CPSB is called using as parameters the substitution table SBX, the mask parameters u0, v0, u1, v1 and a table SB1 resulting from masking the table SBX. Thus after step S31,

$$u\langle 1 \rangle = U\langle 1 \rangle,$$
$$v\langle 1 \rangle = V\langle 1 \rangle, \text{ and} \qquad (7)$$
$$SB1\langle 1 \rangle[i \oplus U\langle 1 \rangle] = SBX[i] \oplus V\langle 1 \rangle$$

with "X<t>" refers to the value of a parameter X at an iteration t.

At step S32, the procedure CPSB is called again one or more times, using as parameters:

the masked table SB1 provided by the previous call to the procedure CPSB, and
the mask parameters u1, v1 computed by the previous call to the procedure CPSB.

The table SB1 is intended to receive the masked result of the table SB1. A previous step S32a can set the parameters u0 and v0 respectively to u1 and v1 and the masked table SB0 to the masked table SB1, provided by the previous call to the procedure CPSB at step S31 or S32. A single active masked table SB1 and corresponding mask parameters u1, v1 can be stored in a non-volatile memory of the circuit CT.

After the second call of the procedure CPSB at step S32, the parameters u1 and v1 and the masked table SB1 are computed as follows:

$$u<2> = u<1> \oplus U<2>,$$
$$v<2> = v<1> \oplus V<2>, \text{ and} \qquad (8)$$
$$SB1<2>[i \oplus U<2>] = SB1<1>[i] \oplus V<2>.$$

After step S32, when the procedure CPSB is called t-1 times, the parameters u and v have the following values:

$$u<t> = u<t-1> \oplus U<t>, \text{ and}$$
$$v<t> = v<t-1> \oplus V<t>. \qquad (9)$$

In addition, a current masked substitution table SB1<t> is computed from a previous masked substitution table SB1<t-1> as follows:

$$SB1<t>[i \oplus U<t>] = SB1<t-1>[i] \oplus V<t>. \qquad (10)$$

At step S33, one masked input data MD1 is processed by an algorithm using the substitution table SBX. The input data MD1 is masked by combining it with the last updated value u<t> (=u1) of the parameter u by an XOR operation. At step S34, an output masked data MSR1 is selected in the masked table SB1 using the data MD1 as index.

At step S35, the procedure CPSB is again called for updating the masked table SB1 and the parameters u1 and v1. Such an update is for example performed between two successive readings of the substitution table SB1 or between two successive encryptions or decryptions of a message. A previous step S35a can set the parameters u0 and v0 respectively to u1 and v1 and the masked table SB0 to the masked table SB1, provided by the previous call to the procedure CPSB at step S32. At step S36, a new masked data MD2 (equal to a non-masked data D2 combined by an XOR operation with the last updated parameter u1) is input to perform a substitution operation of the data D2 using the substitution table SBX. The masked data MD2 can also be computed from a previous value of this data combined with the last input mask U:

$$MD2<t> = MD2<t-1> \oplus U. \qquad (11)$$

To perform the substitution operation, the masked data MD2 is used as index to select a masked substituted data in the masked table SB1 (step S37). The substitution operation provides a masked data MSR2. At step S38, the masked data MSR2 can be unmasked to obtain an unmasked data SR2 (= MSR2⊕v1) by combining the masked data MSR2 with the parameter v1 by an XOR operation.

Therefore, the computations including the substitution operation are protected as soon as the mask parameter u is combined with a data to be processed, until the mask parameter v is combined with a resulting data.

The above-described method can be applied to any encryption or decryption algorithm using a substitution box, such as AES, DES, Triple DES, TwoFish, PRIDE, ARIA and SEED.

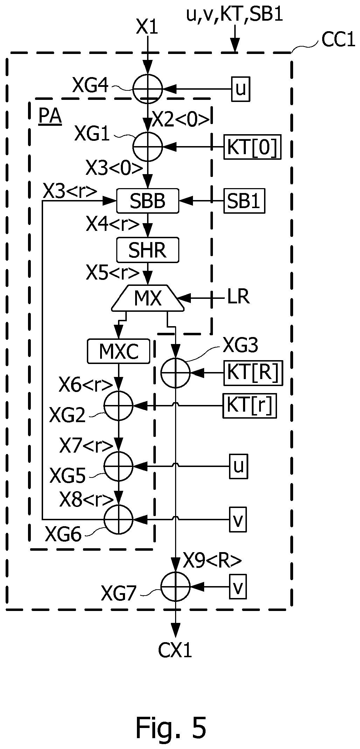

Figure 5 represents an example of a cryptographic calculation circuit CC1 implementing the AES algorithm for encrypting a data. For further details about the AES, the document "Advanced Encryption Standard FIPS PUB 197" published on 26th November 2001 can be referred to. In Figure 5, the cryptographic calculation circuit CC1 receives a data X1 to be processed and supplies a resultant data CX1. The circuit CC1 also receives a round key table KT containing all round keys derived from a secret key according to the AES algorithm. The round keys in the table KT have the same size as the data to be encrypted or decrypted by one execution of the AES algorithm, e.g. 128 bits (=16 bytes) for AES. The circuit CC1 comprises circuits XG1, XG2, XG3 performing XOR operations with round keys, a substitute calculation circuit SBB, a row-based circular permutation calculation circuit SHR, a multiplexer MX and a column-based permutation calculation circuit MXC. The circuits SBB, SHR, and MXC are compliant with AES. The circuit XG1 receives both the data X1 to be encrypted and a derived key KT[0] at an index 0 in the round key table KT supplied to the circuit CC1. The output data X2<0> of the circuit XG1 is processed by the circuits SBB and SHR. The output of the circuit SHR is transmitted by the multiplexer MX to the circuit MXC at rounds 0 to R-1 of the AES algorithm. At a last round R, the output of the circuit SHR is transmitted to the circuit XG3 receiving at another input a last derived key KT[R] at an index R in the round key table KT. At the rounds 0 to R-1, the output of the circuit MXC is processed by the circuit XG2 receiving a derived key KT[j] (j = 1, ..., R-1) read in the table KT. The output of the circuit XG2 is processed by the circuits SBB and SHR. When a certain number (R-1) of calculation rounds are performed (10, 12 or 14, in accordance with the AES) by the chain comprising the circuits SBB, SHR, MXC, XG2, the multiplexer MX is actuated to provide the output of the circuit SHR to the input of the circuit XG3 which provides the output data CX1.

During a first calculation round, the data X1 is processed by the circuit XG1 which adds to it the first derived key KT[0] by an XOR operation. The circuit XG1 provides the resulting data X1⊕K[0] which is processed successively by the circuits SBB, SHR, MXC and XG2. Then the circuit XG2 combines the data provided by the circuit MXC with a derived key KT[j] (j = 1, ..., R-1). The circuits SBB, SHR, MXC and XG2 are successively activated for several rounds of the AES algorithm. The circuits SBB, SHR and XG3 are activated at a last round R of the AES algorithm. At each round j, a round key KT[j] (j = 1, ..., R-1) is read in the table KT.

The substitute calculation circuit SBB is generally implemented using a substitution table SBX receiving an input data used as an index to select an output data in the substitution table. The substitution table SBX comprises 256 bytes, and each byte of the data to be processed by the circuit SBB is used as an index to select a byte in the table SBX. The permutation calculation circuit SHR can be implemented by a specific circuit.

According to one embodiment, the circuit CC1 comprises circuits XG4, XG5, XG6 and XG7 performing XOR operations with the mask parameters u, u, v and v respectively. Each of the circuit XG4 to XG7 receives one of the mask parameters u, v, having the size of one word (e.g. one byte), and an input data of several words of the size of the mask parameter (16 bytes), and performs an XOR operation with the mask parameter u for each word of the size of the mask parameter included in the input data. The circuit XG4 receives the input data X1 and the mask parameter u, and provides to the circuit XG2 a masked input data X2<0> (= X1 ⊕ u), X1 ⊕ u representing the masked data X1 ⊕ u//u// ... //u, where "//" represents a concatenation operation of bit strings, u//u// ... //u having the size of the data X1. The circuit XG5 is interposed between circuits XG2 and XG6. The circuit XG5 receives at another input the mask parameter u. The circuit XG6 is connected to the output of the circuit XG5 and receives at another input the parameter v. The circuit XG7 is connected at the output of the circuit XG3 and receives at another input the parameter v.

Before the circuit CC1 processes the input data X1, steps S30 to S32 of Figure 4 are carried out to generate a substitution table SB1 and to get corresponding mask parameters u and v, which are provided to the circuit CC1 with the input data X1, and with a round key table KT. The circuit XG2 adds the data X2<0> to a first round key KT[0] read in the table KT. The circuit XG2 provides to the input of the circuit SBB the data X3<0> = X2<0>⊕ KT[0] (= X2<0>⊕u = X1 ⊕ KT[0]⊕u). Thus the expected data X1 ⊕KT[0] to be normally provided to the circuit SBB is masked by the masked parameter u. The circuit SBB which is implemented using the masked substitution table SB1 provides the data:

$$X4\langle 0\rangle = SB1[X1\oplus KT[0]\oplus u] = SBX[X1\oplus KT[0]]\oplus v. \qquad (12)$$

Thus the expected data SBX[X1 ⊕ K<0>] normally provided by the circuit SBB at the first round is masked by the masked parameter v. The circuits SHR and MXC provide expected result data X5<0> and X6<0>, respectively, still masked by the masked parameter v. The circuit XG2 adds to the masked value X6<0>, the second round key KT[1]. Thus the circuit XG2 provides the data X7<1> to the circuit XG5. The circuit XG5 combines the data X7<1> with the mask parameter u and provides the data X8<1> (= X7<1>⊕v⊕u) to the circuit XG6. The data X8<1> is unmasked by the circuit XG6, using the mask parameter v. Thus at the output of the circuit XG6, the data X2<1> is only masked by the mask parameter u and thus is ready to be further processed by the circuit SBB.

At a penultimate round R-1, the circuit XG2 provides a data X7<R> = X6<R-1> ⊕ K[R-1]⊕v. The circuit XG5 provides a data X8<R> = X6<R-1 >⊕K[R-1]⊕v⊕u, and the circuit XG6 provides a data X2<R> = X6<R-1 > ⊕K[R-1]⊕u.

The circuit SBB provides the data:

$$X4\langle R\rangle = SB1[X2\langle R\rangle\oplus K[R-1]\oplus u] = SBX[X3\langle R\rangle\oplus K[R-1]]\oplus v. \qquad (13)$$

The data X5<R> provided by the circuit SHR and which is still masked by the mask parameter v, is added to the last round key KT[R] by the circuit XG3. Thus the circuit XG3 provides a data:

$$X9\langle R\rangle = X5\langle R\rangle\oplus K[R]\oplus v. \qquad (14)$$

The data X9<R> can be unmasked by the circuit XG7 which provides the data:

$$CX1 = X9\langle R\rangle\oplus v = X5\langle R\rangle\oplus K[R]. \qquad (15)$$

It should be noted that all the data processed by the processing chain PA comprising the circuits XG1, SBB, SHR, MXC, XG2, XG5 and XG6, are always masked by either the parameter u or the parameter v or both. Thus the processing chain PA forms a protected area of the circuit CC1. The circuit CC1 can be implemented by software with a same level of protection, since this protection depends on masking operations which can be implemented by either hardware or software without a reduction of the protection level.

Care is to be taken with the order of the operations, when performing the operations of the circuit MXC to keep the masks on the data. According to the AES algorithm, the data X provided to the circuit MXC is presented in a matrix form comprising $4 \times 4$ elements x'<j>, j = 0, 1, ... 15, this matrix being multiplied in the circuit MXC by a coefficient matrix. Thus the data provided by the circuit MXC has a matrix form comprising $4 \times 4$ elements, wherein each element has the following form:

$$ax'<i> \oplus bx'<i+1> \oplus cx'<i+2> \oplus dx'<i+3>$$

where a, b, c, d (= 1, 2 or 3) are elements of the coefficient matrix and i is equal to 0, 4, 8 and 12. For example, the first element of the resulting matrix is equal to:

$$A = 2x'<0> \oplus 3x'<1> \oplus x'<2> \oplus x'<3>,$$

with each byte x'<j> being masked by a same mask M (x'<j> = x<j>$\oplus$v), 3x = 2x$\oplus$x, and a(x$\oplus$v) = ax$\oplus$av. Thus:

$$A = 2x<0> \oplus 3x<1> \oplus 2v \oplus 3v \oplus x'<2> \oplus x'<3>$$
$$= 2x<0> \oplus 3x<1> \oplus 2v \oplus 2v \oplus v \oplus x'<2> \oplus x'<3>$$
$$= 2x<0> \oplus 3x<1> \oplus v \oplus x<2> \oplus v \oplus x'<3>$$
$$= 2x<0> \oplus 3x<1> \oplus x<2> \oplus x'<3>$$

Therefore, at this step of the computations, the mask v is removed, which can form a leakage exploitable by a side channel analysis to determine the data X, even if the mask v reappears when the last XOR operation is performed:

$$A = (2x<0> \oplus 3x<1> \oplus x<2> \oplus x<3>) \oplus v.$$

In contrast, if the computation of element A is performed in the following order:

$$A = 2x'<0> \oplus x'<2> \oplus x'<3> \oplus 3x'<1>,$$

we obtain:

$$A = 2x<0> \oplus x<2> \oplus x'<3> \oplus 3x'<1> \oplus 2v \oplus v$$
$$= 2x<0> \oplus x<2> \oplus x<3> \oplus 3x'<1> \oplus 3v \oplus v$$
$$= 2x<0> \oplus x<2> \oplus x<3> \oplus 3x'<1> \oplus 2v \oplus v \oplus v$$
$$= 2x<0> \oplus x<2> \oplus x<3> \oplus 3x<1> \oplus 2v \oplus 3v$$
$$= 2x<0> \oplus x<2> \oplus x<3> \oplus 3x<1> \oplus v$$

Therefore, when performing the XOR operations in the order of the coefficients a, b, c, d equal to (2 1 1 3), the result of each XOR operation is always masked. The orders (1 2 1 3), (3 1 1 2) and (1 3 1 2) also maintain the masking after each XOR operation. It should also be observed that the mask v applied to the input data is kept in the output data of the MXC operation.

When higher protection is needed, the procedure CPSB can be called at any time during the computation of an encrypted or decrypted data within the computation rounds to further mask the substitution table SBX. Thus the procedure CPSB can be called at each round, provided that the data currently processed be masked by the new mask parameters u and v and unmasked by the old mask parameters u and v.

The decryption according to AES algorithm comprises substantially the same operations as the encryption algorithm. Therefore, the previously described protection method can be applied to protect a program and a circuit implementing the AES decryption algorithm. More particularly, an AES decryption circuit comprises circuits performing XOR operations with round keys derived from the secret key SK, an inverse substitute calculation circuit, an inverse row-based circular permutation calculation circuit, and an inverse column-based permutation calculation circuit. The method illustrated in Figures 3 to 5 can be applied to the AES decryption algorithm merely by replacing the circuits SBB, SHR and MXC by circuits implementing inverse operations. The inverse column-based permutation calculation circuit also computes data having the following form:

$$ax<i> \oplus bx<i+1> \oplus cx<i+2> \oplus dx<i+3>,$$

where the coefficients (a, b, c, d) are equal to (9, 11, 13, 14) with different orders. These coefficients allow the XOR operations to be computed in any order without removing the mask, and the resulting data keeps the same mask as the input data.

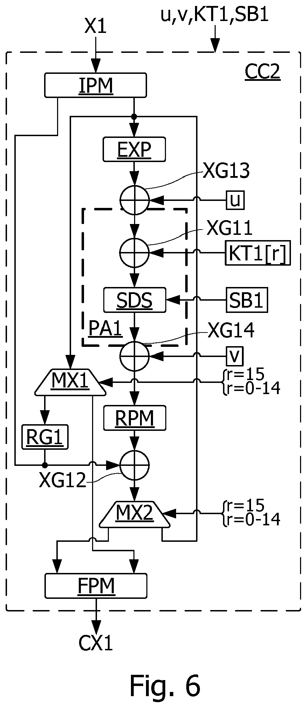

Figure 6 represents an example of a cryptographic calculation circuit CC2 implementing the DES algorithm for encrypting a data. For further details about the DES, the document "Data Encryption Standard (DES) FIPS PUB 46-3" published on 25th October 1999 can be referred to. In Figure 6, the cryptographic calculation circuit CC2 receives a data X1 to be processed and supplies a resultant data CX1. The circuit CC2 also receives a round key table KT containing all round keys derived from a secret key according to the DES algorithm. The circuit CC2 comprises circuits XG11, XG12 performing XOR operations, an initial permutation circuit, an expansion circuit EXP, a substitute calculation circuit SDS, a rotation circuit RPM, one register RG1 and multiplexers MX1, MX2 and a final permutation circuit FPM. The input data X1 which is encoded on a 64-bit word is applied to the initial permutation circuit IPM. The result of the permutation performed by the circuit IPM is divided into a left and a right 32-bit word. The left word is transmitted to the circuit XG12. The right word is transmitted to the multiplexer MX1 and to the expansion circuit EXP which provides a 48-bit word and to the register RG1. The multiplexer MX2 has one output connected to a left input of the circuit FPM, and one output connected to the register RG1. The output word of the circuit EXP is combined with a first round key KT1[0] also encoded on 48 bits by the circuit XG11. The result of the operation performed by the circuit XG11 is processed by the substitute calculation circuit SDS which provides a 32 bit word which is further processed by the rotation circuit RPM. The result of the RPM circuit is combined by the circuit XG12 with the 32-bit word provided either by the circuit IPM, or the register RG1. The result provided by the circuit XG12 is transmitted to the multiplexer MX2 having two outputs. A first output of the multiplexer MX2 is connected to a right input of the circuit FPM and a second output of the multiplexer MX2 is connected to the input of the multiplexer MX1 and of the circuit EXP.

At a first calculation round according to the DES algorithm, the right 32-bit word in output of the circuit IPM is stored in the register RG1 and processed by the circuits EXP, XG11, SDS, RPM and provided to the circuit XG12. The left 32-bit word in output of the circuit IPM is transmitted to the input of the circuit XG12. The output of the circuit XG12 is transmitted by the multiplexer MX2 to the multiplexer MX1 and the circuit EXP for a new calculation round. At a second calculation round, the word received by the multiplexer MX1 is stored in the register RG1 and processed by the circuit EXP, XG11, SDS, RPM and XG12 which receives the word in the register RG2.

At a 14th round, the multiplexer MX2 transmits the word in output of the circuit XG12 to the multiplexer MX1 and to the circuit EXP to be further processed at a 15th and last round. At the 15th, the word at the output of the circuit XG12 is provided by the multiplexer MX2 as a most significant word to a left input of the final permutation circuit FPM. At the same time the multiplexer MX1 provides the word previously provided by the circuit XG12 as a least significant word to a right input of the circuit FPM, which outputs the output data CX1.

According to one embodiment, steps S30 to S32 of Figure 4 are carried out to generate the eight DES substitution tables SB1 and to get corresponding mask parameters u and v, which are input to the circuit CC2 with the input data X1, and the round key table KT1. The mask parameter u encoded on 6 bits is added by a circuit XG13 performing XOR operations to the word provided by the circuit EXP. The circuit SDS using one of the substitution tables SB1 provides a result added to the mask parameter v encoded on 4 bits. The mask parameter v is added by a circuit XG14 performing XOR operations to the output of the circuit SDS. In this way, the mask v is removed from the word provided by the circuit SDS. Therefore the words processed by the circuit CC2 are protected from the output of the circuit XG13 to the input of the circuit XG14. All the data processed by the processing chain PA1 comprising the circuits XG11 and SDS, are always masked by either the parameter u or the parameter v. Thus the processing chain PA1 forms a protected area of the circuit CC2. The circuit CC2 can be implemented by software with a same level of protection, since this protection depends on masking operations which can be implemented by either hardware or software without a reduction of the protection level.

When higher protection is needed, the procedure CPSB can be called at any time during the computation of an encrypted or decrypted data within the computation rounds to further mask the substitution tables SB1. Thus the procedure CPSB can be called at each round, provided that the data currently processed be masked by the new mask parameters u and v and unmasked by the old mask parameters u and v. The currently processed data can be also obtained from a previously processed data and the last input mask U or V.

The decryption according to DES algorithm comprises substantially the same operations as the encryption algorithm. Therefore, the previously described protection method can be applied to protect a program and a circuit implementing the DES decryption algorithm.

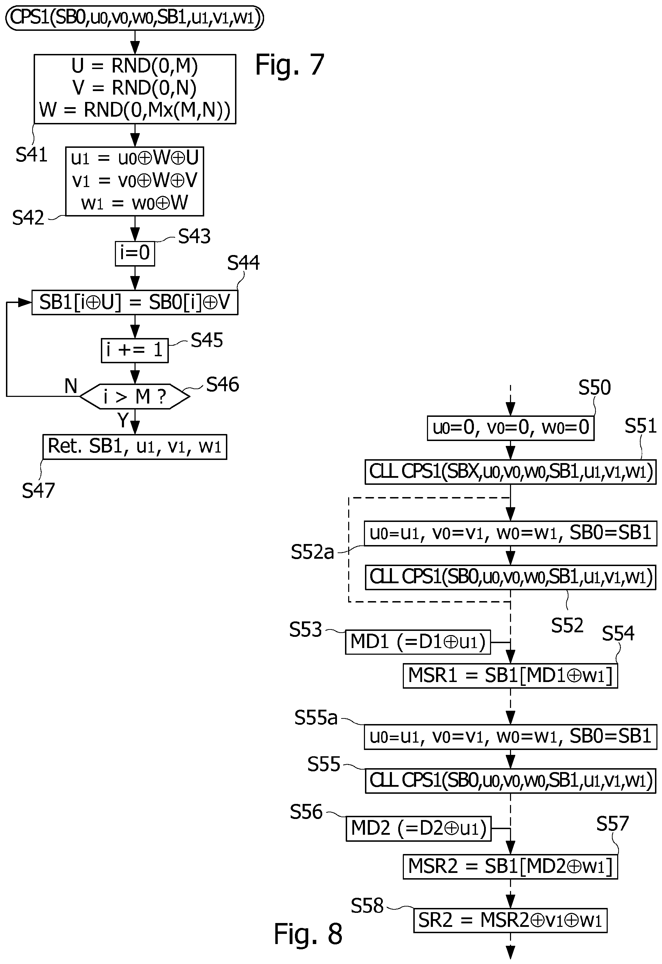

Figure 7 represents steps S41 to S47 of a procedure CPS1 generating a masked substitution table SB1 from another substitution table SB0, according to one embodiment. The procedure CPS1 receives the substitution table SB0 to be masked and mask parameters u0, v0, w0, and provides a masked table SB1, and updated mask parameters u1, v1, w1. At step S41, an input masks U, V and W are determined between 0 and a maximum value. For the input mask U, the maximum value is a value M, for the input mask V, the maximum value is a value N, and for the input mask W, the maximum value is the greatest value between the values M and N. The input masks U, V, W can be chosen randomly. The value M corresponds with the amount of data in the substitution table SB0 minus one, and the value N corresponds with the maximum value of the data in the table SB0. At step S42, the mask parameters u1, v1, w1 are computed using the masks input U, V, W and the previous values of the mask parameters u0, v0, w0, as follows:

$$u1 = u0 \oplus W \oplus U$$
$$v1 = v0 \oplus W \oplus V \tag{16}$$

$$w1 = w0 \oplus W \tag{17}$$

The XOR operations are performed in the order presented in each of the equations (16). The parameter W is truncated when combined with data (U or V) of smaller size. It results from the equation (16) that the parameter u0 is masked by the input masks W and U, the parameter v0 is masked by the input masks W and V and the parameter w0 is masked by the input mask W.

At step S43, an index i is initialized to zero (0). At step S44, the index i is used to select an output data SB0[i] in the substitution table SB0 and the selected output data SB0[i] is masked by combining it with the input mask V by an XOR operation. The result of the XOR operation SB0[i]⊕V is stored in the masked table SB1 at an index i⊕U resulting from the combination by an XOR operation of the index i with the input mask U:

$$SB1[i \oplus U] = SB0[i] \oplus V. \tag{18}$$

At step S45, the index i is incremented by one (1). At step S46, the index i is compared with the value M. If the index i is greater than the value M, step S47 is executed otherwise steps S44 to S46 are executed again for a new iteration. At step S47, the masked table SB1 is completely defined and provided as output of the procedure CPS1 with the updated parameters u1, v1 and w1.

It should be observed that the masked table computed at step S44 can be obtained by several others ways, defined in the following equations examples:

$$SB1[i] = SB0[i \oplus U] \oplus V. \tag{19}$$

$$SB1[pr[i] \oplus U] = SB0[pr[i]] \oplus V. \tag{20}$$

$$SB1[pr[i]] = SB0[pr[i] \oplus U] \oplus V. \tag{21}$$

with pr[i] being a permutation over the set of integer numbers {0, ..., M}. In addition the permutation pr can be randomly generated, for example each time the masked table SB1 is computed from a previous table SB0. Thus the permutation pr enables the elements of the masked table SB1 to be computed in a random order.

Figure 8 represents steps S50 to S58 of a procedure using a substitution table SBX, according to one embodiment. The procedure comprises initialization steps S50 to S52. At step S50, the mask parameters u, v, and w are initialized to zero (0). At step S51, the procedure CPS1 is called using as parameters the substitution table SBX, the mask parameters u, v, w and a table SB1 resulting from masking the table SBX. Thus after step S51,

$$u<1> = W<1> \oplus U<1>,$$
$$v<1> = W<1> \oplus V<1>,$$
$$w<1> = W<1>, \text{ and} \qquad (22)$$
$$SB1<1>[i \oplus U<1>] = SBX[i] \oplus V<1>$$

where "X<t>" refers to the value of a parameter X at an iteration t.

At step S52, the procedure CPS1 is called again one or more times using as parameters the masked table SB1 provided by the previous call to the procedure CPS1, the mask parameters u, v, w updated by the previous call to the procedure CPS1, the table SB1 being intended to receive the masked result of the table SB1. Thus after the second call of the procedure CPS1 at step S52, the parameters u, v and w and the masked table SB1 are computed as follows:

$$u<2> = u<1> \oplus W<2> \oplus U<2>,$$
$$v<2> = v<1> \oplus W<2> \oplus V<2>,$$
$$w<2> = w<1> \oplus W<2> \text{ and} \qquad (23)$$
$$SB1<2>[i \oplus U<2>] = SB1<1>[i] \oplus V<2>.$$

After step S52, when the procedure CPS1 is called t-1 times, the parameters u, v and w have the following values:

$$u<t> = u<t-1> \oplus W<t> \oplus U<t>,$$
$$v<t> = v<t-1> \oplus W<t> \oplus V<t>, \text{ and} \qquad (24)$$
$$w<t> = w<t-1> \oplus W<t>.$$

In addition, a current masked substitution table SB1<t> is computed from a previous masked substitution table SB1<t-1> as follows:

$$SB1<t>[i \oplus U<t>] = SB1<t-1>[i] \oplus V<t>. \qquad (25)$$

At step S53, one masked input data MD1 is processed by an algorithm using the substitution table SB1. The input data MD1 is masked by combining the last updated value u<t> of the parameter u1 by an XOR operation. At step S54, an output masked data MSR1 is selected in the masked table SB1 using as an index the data MD1 $\oplus$ w, obtained by adding the input data MD1 to the last value w<t> of the parameter w by an XOR operation.

At step S55, the procedure CPS1 is called again for updating the masked table SB1 and the parameters u, v and w. Such an update is for example performed between two successive readings of the substitution table SB1 or between two successive encryptions or decryptions of a message. At step S56, a new masked data MD2 (equal to a non-masked data D2 combined by an XOR operation with the last updated parameter u1) is input to perform a substitution operation of the data D2 using the substitution table SBX. To this end, the masked data MD2 is combined with the updated parameter w by an XOR operation and used as index to select a masked substituted data in the masked table SB1 (step S57). The substitution operation provides a masked data MSR2. At step S58, the masked data MSR2 can be unmasked to obtain an unmasked data SR2 (= (MSR2$\oplus$v1)$\oplus$w1) by combining the masked data MSR2 by XOR operations first with the parameter v and then with the mask parameter w.

When considering the parameters:

$$u'<t> = u'<t-1> \oplus U<t>, \text{ and}$$
$$v'<t> = v'<t-1> \oplus V<t>, \qquad (26)$$

it follows that:

$$u'<t> \oplus w<t> = u'<t-1> \oplus w<t-1> \oplus W<t> \oplus U<t>$$
$$v'<t> \oplus w<t> = v'<t-1> \oplus w<t-1> \oplus W<t> \oplus V<t>, \qquad (27)$$

and that:

$$u<t> = u'<t> \oplus w<t>, \text{ and}$$
$$v<t> = v'<t> \oplus w<t>. \qquad (28)$$

Thus, it could be said that $u'<t>$ and $v'<t>$ are hidden parameters resulting from masking the parameters $u<t>$ and $v<t>$, using as mask the parameter $w<t>$ for each iteration t from t=2. From the above definitions and properties of SB1, u' and v', and by applying the equation (25) to several iterations t, the content of the masked substitution table SB1<t> can be expressed as follows:

$$SB1<t>[i \oplus U<t>] = SBX[i \oplus u'<t-1>] \oplus v'<t-1> \oplus V<t>. \qquad (29)$$

When replacing the index i by $i \oplus u'<t-1>$ in equation (29), it becomes:

$$SB1<t>[i \oplus U<t> \oplus u'<t-1>] = SBX[i] \oplus v'<t-1> \oplus V<t>. \qquad (30)$$

Thus by considering the equations (26), it can be deduced the following equation:

$$SB1<t>[i \oplus u'<t>] = SBX[i] \oplus v'<t>. \qquad (31)$$

It results that the substitution table SBX, as well as the mask parameters $u'<t>$ and $v'<t>$ are never used in the computations of the masked tables SB1<t> in the procedure CPS1, after the execution of step S51. Therefore, if the first masked table SB1<1> is computed from the substitution table SBX in a protected area, a two order side channel analysis cannot exploit a leakage both on a masked data $D \oplus U<t>$ and on the mask $U<t>$ to discover the data SBX[D].
When the amount of data in the table SBX is different from the maximum value of the data in the table, another mask parameter y can be used, the mask parameter w having the same size as the mask parameters u and U, and the mask parameter y having the same size as the mask parameters v and V. Therefore, at step S22, the mask parameters are computed as follows:

$$u1 = u0 \oplus W \oplus U$$
$$v1 = v0 \oplus Y \oplus V \qquad (32)$$
$$w1 = w0 \oplus W$$
$$y1 = y0 \oplus Y$$

The masked substitution table SB1 is still computed as defined by the equation (18). The equation (31) remains unchanged but the mask parameters u' and v' are defined as follows:

$$u<t> = u'<t> \oplus w<t>, \text{ and}$$
$$v<t> = v'<t> \oplus y<t>. \qquad (33)$$

At steps S54 and S57, the index to be used to select a data in the substitution table SB1 is $D \oplus u1 \oplus w1$, D being an unmasked data, and a masked data MSR selected in a substitution table can be unmasked by adding it to XOR operations with the parameters v1 and y1.

It can be observed that the equations (32) and (33) are applicable even when the amount of data in the table SBX is the same as the maximum value of the data in the table. Thus distinct input masks W, Y, and mask parameters w and y can also be used to compute the mask parameters u and v.

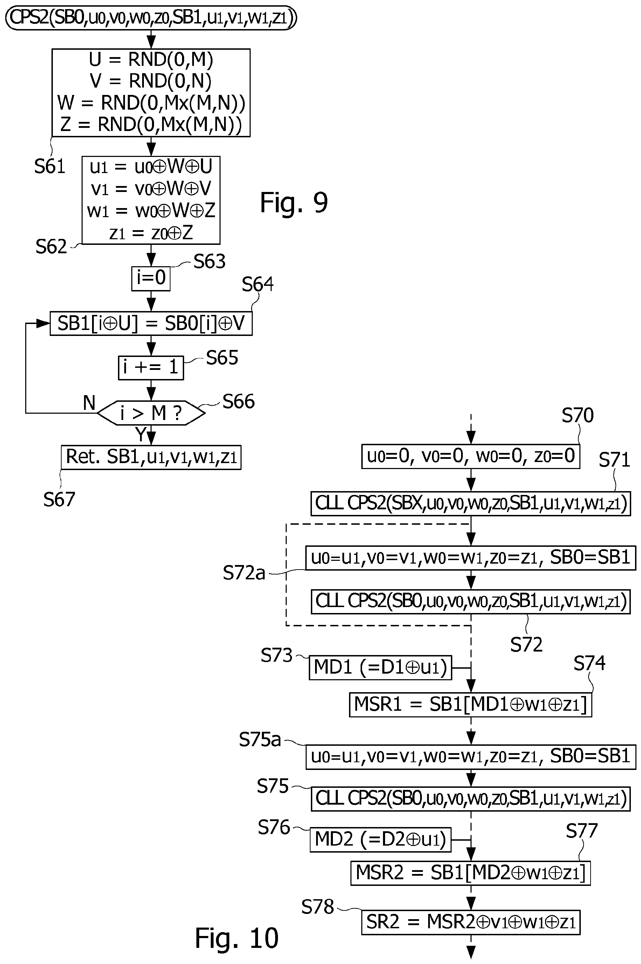

The above-disclosed methods using the mask parameter w cannot prevent three or higher order side channels analyses, detecting and combining three data leakages, from D⊕u'<t>, u'<t>⊕w<t> and w<t>, in order to discover the value of the data D. However, this method can be adapted to prevent such analyses. Figure 9 represents steps S61 to S67 of a procedure CPS2 derived from the procedure CPS1 for preventing a three order side channel analysis, according to another embodiment. As the procedure CPS1, the procedure CPS2 generates a masked substitution table SB1 from another substitution table SB0. Step 61 differs from step S41 in that another mask input Z is chosen between 0 and the greatest value between the values M and N., As an example, the mask input Z is chosen randomly. Step 62 differs from step S42 in that the parameter w is now updated using in addition the mask Z which is combined with the mask W by an XOR operation:

$$w1 = w0 \oplus W \oplus Z \qquad (34)$$

Step 62 also comprises updating a parameter x by combining it with the mask X by an XOR operation:

$$z1 = z0 \oplus Z \qquad (35)$$

Steps 63 to S66 are the same as steps S43 to S46. Step S67 differs from step S47 in that the parameter x0 is an input and the parameter z1 an output of the procedure CPS1.

Figure 10 represents steps S70 to S78 of another procedure using the substitution table SBX, in relation with the embodiment of Figure 4. This procedure comprises optional initialization steps S70 to S72. Step S70 differs from step S50 in that the parameter z0 is also initialized to zero (0). Steps S71, S72 and S75 differ from steps S51, S52 and S55 in that the procedure CPS2 is called instead of the procedure CPS1. As a consequence, the parameters z0 and z1 appear in the calls to the procedure CPS2 at steps S71, S72 and S75. In steps S72a and S75a, the mask parameter z0 is further set to the value of the mask parameter z1 provided by a previous call to the procedure CPS2. Steps S73 and S76 are the same as steps S53 and S56 to process the data D1 and D2 masked by the parameter u1. The substitution operation using the substitution table SBX performed at steps S74 and S77 differs from the one performed at steps S54 and S57 in that the masked data MD1, MD2 are further masked using both the parameters w1 and z1 by XOR operations. Each of the masked data MSR1, MSR2 obtained at steps S74 and S77 can be unmasked to obtain the data SR1 and SR2, by combining the masked data MSR1, MSR2 with the parameters v1, w1 and z1 by XOR operations (step S78).

The masking procedure CPS2 illustrated in Figure 9 may be vulnerable to fourth order or higher order side channel analyses combining four leakages from D⊕u'<t>, u'<t>⊕w'<t>, w'<t>⊕z<t> and z<t>, with w'<t>=w<t>⊕z<t>. However the method previously disclosed is easily adaptable to prevent side channel analyses of higher order, simply by adding another level of masking, using another mask parameter zz, for hiding the mask z, and so on. Thus, the new masked substitution table can be generated by selecting input masks of rank 1 to n, n being an integer number greater than one, for each rank j from 1 to n-1, computing a new value of a mask parameter of rank j by combining by XOR operations the previous value of the mask parameter of rank j with the input masks of ranks j and j+1, and computing a new value of a mask parameter of rank n by applying XOR operations to a previous value of the mask parameter of rank n and to the input mask of rank n. When using mask parameters up to rank n, the substitution operation comprises applying XOR operations to the masked input data with each of the mask parameters of ranks one to n, the masked output data of the substitution operation corresponding to the output data of the substitution operation, combined by XOR operations with the second mask parameter and with each of the mask parameters of ranks one to n.

When the amount of data in the table SBX is different from the maximum value of the data in the table, two mask parameters can be used for each rank one to n, first mask parameters of ranks one to n having a same size as the input mask U, and second mask parameters of ranks one to n having a same size as the input mask V.

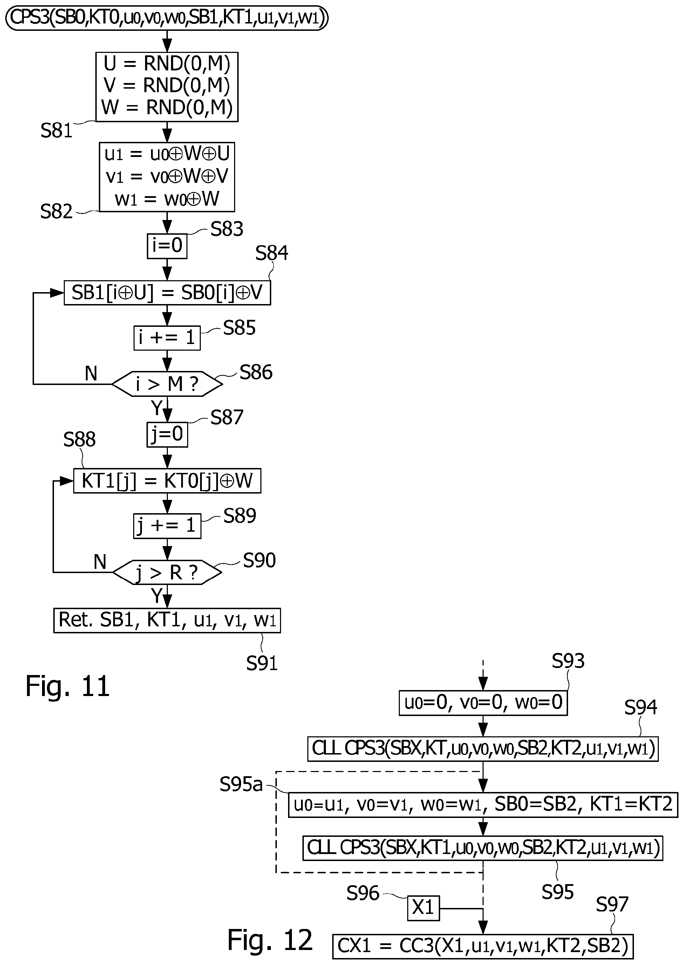

Figure 11 represents steps S81 to S91 of a procedure CPS3 derived from the procedure CPS1 to be adapted to the AES algorithm. Steps S81 to S86 are the same as steps S41 to S46. The parameters U, V, W, u0, v0, w0, u1, v1, w1 have the size of one byte (the values M and N are the same). The procedure CPS3 also receives a substitution table SB0 which can be the substitution table SBX used by the AES algorithm or a previously masked substitution table, and a round key table KT0 which can be the round key table KT containing all round keys derived from a secret key according to the AES algorithm, or a previously masked round key table KT0. At steps S84 to S86, the substitution table SB0 is masked by the parameters U and V which can be randomly selected at step S81. At step S87, an index j is initialized to zero (0). At step S88, the index j is used to select a round key KT0[j] in the round key table KT0. Each byte of the selected round key KT0[j] is added to the parameter W by an XOR operation and the resulting masked round key KT1[j] is stored in the round key table KT1 at the same index j. At step S89, the index j is incremented by one (1). At step S90, the index j is compared with a maximum value R corresponding to the number of rounds performed by the considered AES algorithm. If the index j is greater than the value R, step S91 is executed otherwise steps S88 to S90 are executed again for a new iteration. At step S91, the masked table KT1 is provided as output of the procedure CPS3 with the masked table SB1 computed at steps S84 to S86 and with the updated parameters u1, v1 and w1 computed at step S82.

Figure 12 represent steps S93 to S97 which are executed to call the procedure CPS3 several times to compute parameters u1, v1, w1, and to generate a masked substitution table SB2 and a masked round key table KT2. This procedure comprises optional initialization steps S93 to S94. At step S93, the mask parameters u0, v0, and w0 are initialized to zero (0). At step S94, the procedure CPS3 is called using as parameters the substitution table SBX used in the AES algorithm, the mask parameters u, v, w, the round key table KT2 and a masked table SB2 computed from the table SBX. At step S95, the procedure CPS3 is called one or more times using as parameters the masked table SB2 provided by the previous call to the procedure CPS3, the mask parameters u1, v1, w1 updated by the previous call to the procedure CPS3, and the masked round key table KT2 provided by the previous call to the procedure CPS3, the table SB2 being intended to receive the masked result of the previous table SB2. At a previous step S95a, the mask parameters u0, v0, w0 can be set to the updated mask parameters u1, v1, w1. The tables SB0 and KT1 can be set to the updated tables SB2 and KT2. At step S96, a data X1 to be processed is introduced. At step S97, a circuit CC3 implementing the AES algorithm is activated, the circuit CC3 receiving the data X1, the parameters u, v, w, and the masked tables SB2 and KT2. The circuit CC3 returns an output data CX1, resulting from encryption or decryption of the data X1 by the AES algorithm.

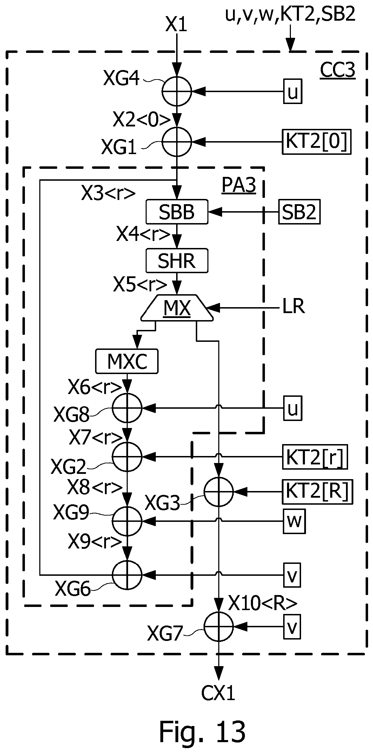

Figure 13 represents another example of a cryptographic calculation circuit CC3 implementing the AES algorithm for encrypting a data. According to one embodiment, the circuit CC3 differs from the circuit CC1 in that it does not comprise the circuit XG5, but comprises additional circuits XG8 and XG9 performing XOR operations with the mask parameters u and w respectively. Each of the circuit XG4 and XG6 to XG9 receives one of the mask parameters u, v, w, having the size of one word (e.g. one byte), and an input data of several words of the size of the mask parameter (16 bytes in the illustrated example), and performs an XOR operation with the mask parameter u, v, w for each word of the size of the mask parameter included in the input data.

The circuit XG8 is interposed between circuits MXC and XG2. The circuit XG9 is interposed between the circuits XG2 and XG6.

The circuit XG4 provides a data X2<0> resulting from masking the data X1 by the mask parameter u, i.e. by the parameter u'⊕w. This means that each word of the size of the parameter u within the data X1 is masked by the parameter u. As a result of step S88 (Figure 411) executed several times, the round key KT[0] is previously masked by the parameter w (KT2[0] = KT[0] ⊕ w). Thus the circuit XG1 provides at the input of the circuit SBB the data:

$$X3<0> = X2<0> \oplus KT2[0]$$
$$= X1 \oplus u' \oplus w \oplus KT[0] \oplus w = X1 \oplus KT[0] \oplus u', \qquad (36)$$

KT[0] being the first round key without mask. Therefore the expected data X1 ⊕ KT[0] to be normally provided to the circuit SBB is masked by the masked parameter u' (= u⊕w) which is not computed. The circuit SBB which is implemented using the masked substitution table SB2 provides the data:

$$X4<0> = SB1[X1 \oplus K<0> \oplus u'] = SB2[X1 \oplus K<0>] \oplus v' \qquad (37)$$

(see equation (31)). Thus the expected data SB2[X1⊕KT[0]] normally provided by the circuit SBB is masked by the masked parameter v' (= v⊕w) which is not computed. The circuits SHR and MXC provide expected result data X5<0> and X6<0>, respectively, still masked by the masked parameter v'. At the output of the circuit XG8, the data X7<0> is further masked by the parameter u (= u' ⊕w). The circuit XG2 adds to the masked value X7<0>, the masked round key KT2[1] = KT[1]⊕w, KT[1] being the second round key without mask. Then the circuit XG2 provides the data:

$$X8<0> = X7<0> \oplus KT2[1] = X6<0> \oplus u' \oplus w \oplus KT[1] \oplus w. \qquad (38)$$

At the output of the circuit XG9, the data X9<0> is further masked by the parameter w. Thus at the output of the circuit XG9, the data X9<0> is masked by the parameter u'⊕v'.

Since v = v'⊕w, the circuit XG6 provides the data:

$$X3<1> = X9<0> \oplus v = KT[1] \oplus X6<0> \oplus u', \qquad (39)$$

which is masked by the parameter u' as the data provided by the circuit XG1. Thus the data X3<1> is ready to be further processed by the circuit SBB.

At a penultimate round R-1, the circuit XG6 provides a data:

$$X3<R> = X8<R-1> \oplus KT[R-1] \oplus u'. \qquad (40)$$

The circuit SBB provides the data:

$$X4<R> = SB2[X3<R>] = SBX[X3<R> \oplus u'] \oplus v'. \qquad (41)$$

The data X5<R> provided by the circuit SHR and which is still masked by the parameter v', is added to the last round key KT2[R] (= KT[R]⊕w) by the circuit XG3. Thus the circuit XG3 provides the data:

$$X10<R> = X5<R> \oplus KT[R] \oplus v' \oplus w = X5<R> \oplus KT[R] \oplus v. \qquad (42)$$

Then the circuit XG7 provides the data:

$$CX1 = X10<R> \oplus v = X5<R> \oplus KT[R], \qquad (43)$$

by removing the mask v from the data X10<R>.

It should be noted that all the data processed by the processing chain PA2 comprising the circuits SBB, SHR, MXC, XG8, XG9, XG2, XG6 and XG3, are always masked by either the parameter u' or the parameter v' or both, which are never computed nor directly used, since they are always masked by the parameter w. Thus the processing chain PA2 forms a protected area of the circuit CC3. The circuit CC3 can be implemented by software with a same level of protection, since this protection depends on masking operations which can be implemented by either hardware or software without a reduction of the protection level.

When higher protection is needed, the procedure CPS3 can be called at any time during the computation of an encrypted or decrypted data within the computation rounds. The current value of the processed data just needs to be combined by an XOR operation with the random parameter U or V determined at step S81 of the procedure CPS3 each time this procedure is called.

The protection method illustrated in Figures 11 to 13 can be applied to the algorithms AES-128, AES-192 and AES-256, since they differ from one another only by their number of rounds.

The XOR operations in the circuit MXC should be performed in an order that does not remove the mask v' from the processed data X5<j> or a part thereof.

The protection method illustrated in Figures 11 to 13 can be applied to protect a program and a circuit implementing the AES decryption algorithm, merely by replacing the circuits SBB, SHR and MXC by circuits implementing inverse operations.

The embodiment illustrated in Figures 9 and 10 can also be applied to the AES algorithm for preventing higher order side channel analyses, simply by adding an XOR circuit after the circuit XG6 to perform an XOR operation with the parameter x.

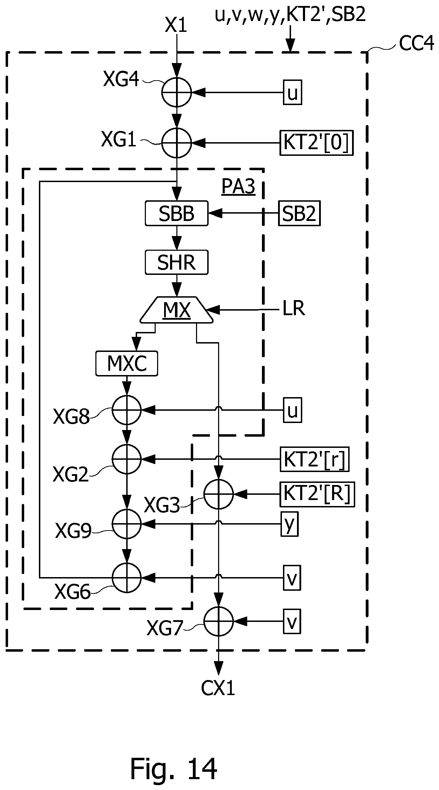

Figure 14 represents another example of a cryptographic calculation circuit CC4 implementing the AES algorithm for encrypting a data, the circuit CC4 being protected by applying the above-described method using two different mask parameters w and y applied to the mask parameters u and v, respectively. The circuit CC4 differs from the circuit CC3 in that the circuit XG9 receives the mask parameter w1 instead of the mask parameter w, and in that it comprises two additional circuits XG10 and XG1a, performing XOR operations arranged between the multiplexer MX and the circuit XG3. The circuit XG10 receives the output data of the circuit SHR via the multiplexer and the parameter w. The circuit XG1a receives the output data of the circuit XG10 and the parameter w1, the output of the circuit XG1a being provided to the circuit XG3. The circuits XG10 and XG1a remove the mask parameters w and w1 from the data provided at the last round by the circuit SHR.

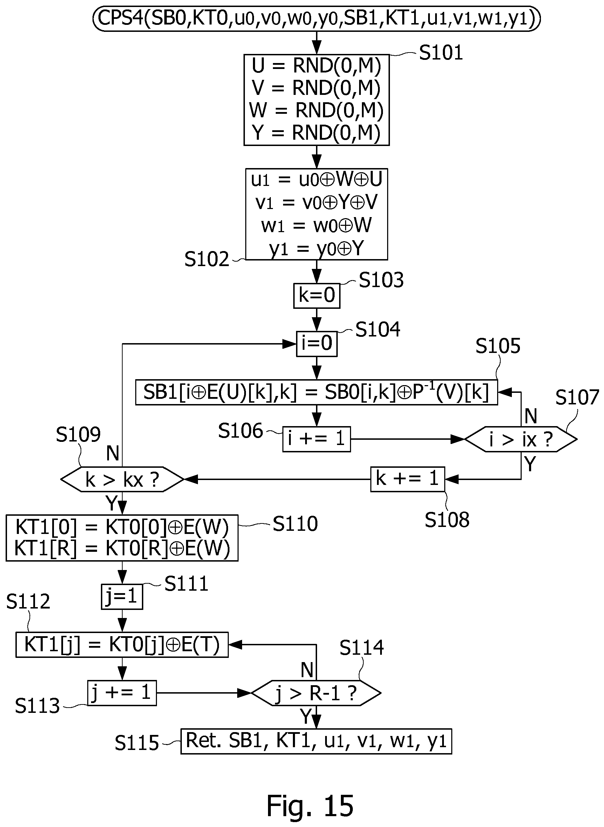

The above-described protection can be also applied to other cryptographic algorithms combining XOR operations and substitution operations using substitution tables. Figures 15 to 17 illustrate application of this method to DES algorithm.

Figure 15 represents steps S101 to S115 of a procedure CPS4 derived from the procedure CPSB to be adapted to the DES algorithm. The procedure CPS4 receives a set of eight substitution tables SB0[k] to be processed, which can be those defined for the DES algorithm or a previously masked substitution table. The procedure CPS4 also receives mask parameters u0, v0, w0, y0 encoded on 32 bits and a round key table KT0 containing round keys derived from a secret key according to the DES algorithm or masked round keys. The procedure CPS4 provides a masked table SB1, a masked round key table KT1 and updated parameters u1, v1, w1, y1. At step S101, input masks U, V, W and Y are determined between 0 and a maximum value M equal to $2^{32}$-1. The input masks U, V, W and Y can be chosen randomly. At step S102, the mask parameters u1, v1, w1, y1 are computed using the input masks U, V, W, Y and the mask parameters u0, v0, w0, y0, according to equations (32).

At step S103, an index k is initialized to zero (0). At step S104, an index i is initialized to zero (0). At step S105, the table SB1 is updated using the following equation:

$$ SB1[i \oplus E(U)[k],k] = SB0[i,k] \oplus P^{-1}(V)[k] \qquad (44) $$

where SB0[...,k] represents a DES substitution table of rank k (with k = 0 to 7), each table SB0[...,k] comprising 16x4 4-bit words which can be selected using 6-bit indexes, E(U) represent a 48-bit word resulting from the DES expansion operation applied to the mask U, E(U)[k] represents a 6-bit word of rank k in the word E(U), $P^{-1}(V)$ represents a 32-bit word resulting from the reverse round permutation operation $P^{-1}$ applied to the mask V, and $P^{-1}(V)[k]$ represents a 4-bit word of rank k in the word $P^{-1}(V)$. At step S106, the index i is incremented by one (1). At step S107, the index i is compared with a maximum value ix which is equal to $2^6$-1 (=63). If the index i is greater than the value ix, steps S108 and S109 are executed, otherwise steps S105 to S107 are executed again for a new iteration. At step S108, the index k is incremented by one (1). At step S109, the index k is compared with a maximum value kx which is equal to 7. If the index k is greater than the value kx, steps S110 to S115 are executed, otherwise steps S104 to S109 are again executed for a new iteration.

Step S110 computes masked first and last DES round keys KT1[0] and KT1[R] from a round key table KT0 containing all round keys derived from a secret key according to the DES algorithm or a masked round key table. Each round key KT0[j] in the table KT0 is a 48-bit word. The masked round keys KT1[0] and KT1[kx] are computed by an XOR operation applied to the result provided by the DES expansion operation E applied to the parameter W. At step S111, an index j is initialized to one (1). At step S112, the index j is used to select a round key KT1[j] in the round key table KT1. The selected round key KT1[j] is computed by masking the round key KT0[j] by an XOR operation by the result of the DES expansion operation E applied to the input parameter T. At step S113, the index j is incremented by one (1). At step S114, the index j is compared with a maximum value R minus one (1) corresponding to the number of rounds (16, R = 15) performed by the DES algorithm. If the index j is greater than the value R-1, step S115 is executed otherwise steps S112 to S114 are executed again for a new iteration. At step S115, the masked table KT1 is provided as output of the procedure CPS4 with the masked table SB1 computed at steps S104 to S109 and with the updated parameters u1, v1, w1 and y1 computed at step S102. Here again, the elements of the masked tables SB1 and KT1 can be computed in a random order.

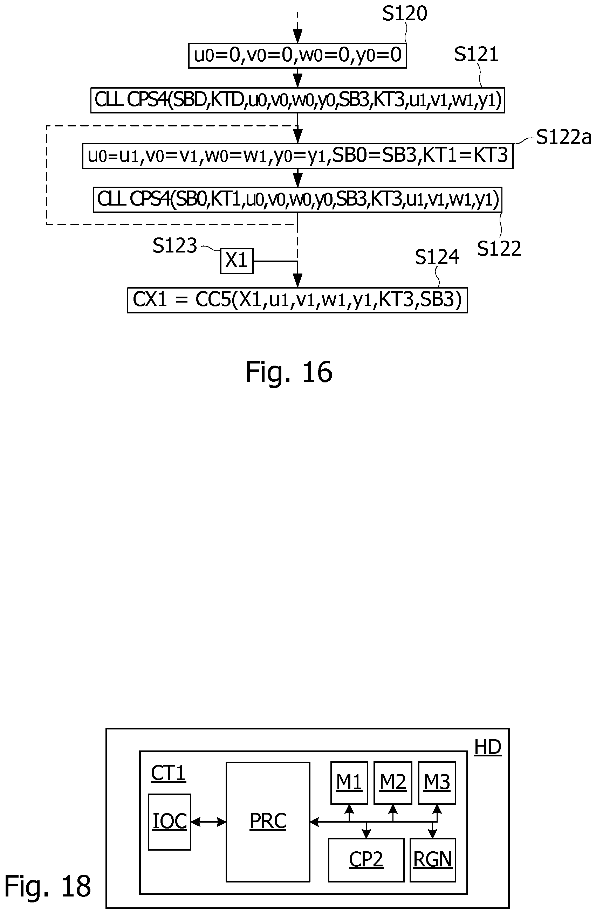

Figure 16 represent steps S120 to S124 which are executed to call the procedure CPS4 several times to compute parameters u1, v1, w1, y1, a masked substitution table SB3 and a masked round key table KT3. This procedure comprises optional initialization steps S120 and S121. At step S120, the mask parameters u0, v0, w0 and t0 are initialized to zero (0). At step S121, the procedure CPS4 is called using as parameters the substitution table SBD and he round key table KTD, defined for the DES algorithm, the mask parameters u0, v0, w0, y0, a round key table KT3, a masked table SB3 computed from the tables KTD and SBD, and updated parameters u1, v1, w1, y1. At step S122, the procedure CPS4 is called one or more times using as parameters the masked tables SB3, KT3 provided by the previous call to the procedure CPS4, the mask parameters u1, v1, w1, y1 updated by the previous call to the procedure CPS4, the tables KT3 and SB3 being intended to receive the masked result of the previous tables KT3 and SB3. Before step S122, step S122a can set the parameters u0, v0, w0, y0 to the values of the previously computed mask parameters u1, v1, w1, y1. The tables SBD and KTD can be set to the updated tables SB3 and KT3.

At step S123, a data X1 to be processed is introduced. At step S124, a circuit CC5 implementing the DES algorithm is activated, the circuit CC5 receiving the data X1, the updated mask parameters u1, v1, w1, y1 and the masked tables SB3 and KT3. The circuit CC5 returns an output data CX1, resulting from encryption or decryption of the data X1 by the DES algorithm.

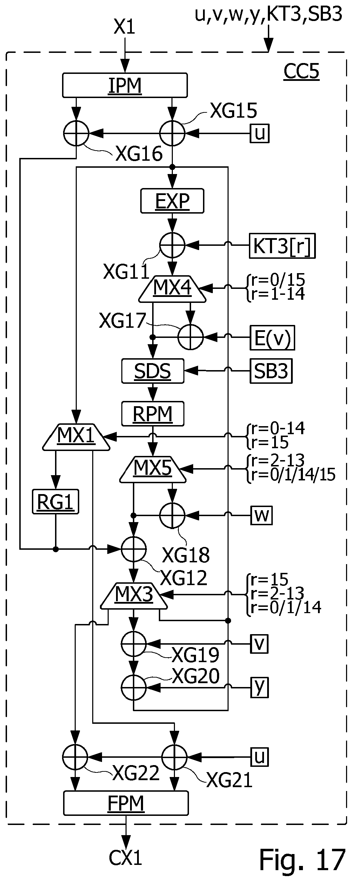

Figure 17 represents another example of the cryptographic calculation circuit CC5 implementing the DES algorithm for encrypting a data. The circuit CC5 differs from the circuit CC2 in that it does not comprise the circuits XG13, XG14 and MX2, but comprises additional circuits XG15, XG16, XG17, XG18, XG19, XG20, XG21 and XG22 and multiplexers MX3, MX4 and MX5. The circuits XG15 to XG22 perform XOR operations with the mask parameters u, u, E(v), w, v, y, u and u respectively. The circuits XG15 and XG16 add by XOR operations the 32-bit mask parameter u respectively to the right and left words in output of the circuit IPM. The multiplexer MX5 supplies the word in output of the circuit XG11 either to the circuit SDS at the rounds 0 and 15 or to the circuit XG17 at the other rounds 1 to 14. The circuit XG17 combines a 48-bit word provided by the circuit EXP with the parameter E(v) having also 48 bits, the parameter E(v) resulting from the application of the expansion function implemented by the circuit EXP to the 32-bit mask parameter v. The multiplexer MX6 supplies the word provided by the circuit RPM either to the circuit XG12 at the rounds 2 to 13 and to the circuit XG18 at the other rounds 0, 1, 14 and 15. The circuit XG18 combines the 32-bit word provided by the circuit RPM with the 32-bit parameter w. The multiplexer MX3 supplies the word in output of the circuit XG12 either to the multiplexer MX1 and the circuit EXP at the rounds 0, 1 and 14, or to the circuit XG19 at rounds 2 to 13, or to the circuit XG22 at the last round (15). The circuit XG19 applies XOR operations to the 32-bit mask parameter v and to a word of the same size computed by the circuit XG12 and transmitted by the multiplexer MX1. The circuit XG20 applies XOR operations to the 32-bit mask parameter y and to a word of the same size computed by the circuit XG19. The output of the circuit XG20 is connected to the input of the multiplexer MX1 and the circuit EXP. The circuit XG21 applies XOR operations to the 32-bit mask parameter u and to a word of the same size provided by the multiplexer MX1, at the last round. The output of the circuit XG21 is connected to the right input of the final permutation circuit FPM. The circuit XG22 applies XOR operations to the 32-bit mask parameter u and to a word of the same size provided by the multiplexer MX3. The output of the circuit XG22 is connected to the left input of the final permutation circuit FPM.

In this way, at the first round (0), the most and least significant words in output of the circuit IPM are masked by the mask parameter u by the circuit XG15 and XG16. As a consequence, the word in output of the circuit EXP is masked by the parameter E(u) resulting from the application of the expansion function E to the mask parameter u. Thanks to the masking of the round key KT3[0], the word provided by the circuit XG11 is masked by the parameter $E(u \oplus w)$. Therefore the words processed by the circuit CC5 are protected from the circuit XG11. Thanks to the masking of the substitution table SB3 performed by the procedure CPS4, the word provided by the circuit SDS is masked by the parameter $P^{-1}(v \oplus y)$. Thus the word in output of the circuit RPM is masked by the parameter $v \oplus t$. The word provided by the circuit XG12 is masked by the parameter $u \oplus v \oplus w \oplus y$.

At the second round (1), the word in output of the circuit EXP is masked by the parameter $E(u \oplus w) \oplus E(v \oplus y)$. The word at the output of the circuit XG11 is masked by the parameter $E(u \oplus w) \oplus E(v)$ which is further masked by the parameter E(v). Thus the circuit SDS receives a word masked by the parameter $E(u \oplus w)$. The word provided by the circuit SDS is masked by the parameter $P^{-1}(v \oplus y)$. Thus the word in output of the circuit RPM is masked by the parameter $v \oplus y$. The word provided by the circuit RPM is further masked by the mask parameter w. Besides, the word in the register RG1 is masked by the parameter u. Therefore, the word provided by the circuit XG12 and further applied to the circuit EXP is masked by the parameter $u \oplus w \oplus v \oplus y$.

At the rounds 2 to 13, the masking of the resulting words is the same except at the output of the circuit XG12 since the word received from the register RG1 is also masked by the parameter $u \oplus w \oplus v \oplus y$. Thus the word in output of the circuit XG12 is masked by the parameter $u \oplus w$, and is further masked by the parameter $v \oplus y$.

At the round 14, the word in output of the circuit RPM already masked by the parameter $v \oplus y$, is further masked by the mask parameter w by the circuit XG18 and is provided to the circuit XG12. Besides the word in the register RG1 is masked by the parameter $u \oplus w \oplus v \oplus y$. Therefore, the word provided by the circuit XG12 is only masked by the mask parameter u.

At the beginning of the last round (15), the word in output of the circuit XG12 and processed by the circuit EXP is only masked by the parameter u. Thus the processing performed by the circuit CC5 is protected until the processing performed by the circuit XG12 at the end of the round 14. The word provided by the circuit EXP is masked by the parameter E(u). At the output of the circuit XG11, the word is masked by the parameter $E(u \oplus w)$ like in the other rounds. Thus the processing performed by the circuit CC5 is again protected. The word at the output of the circuit RPM is masked by the parameter $v \oplus y$ and is further masked by the parameter w by the circuit XG18. Since the word in the register RG1 is masked by the parameter $u \oplus w \oplus v \oplus y$, the word provided by the circuit XG12 is only masked by the parameter u. Thus the processing performed by the circuit CC5 is no more protected at the output of the circuit XG12 in the last round. The word provided to the circuit EXP and the multiplexer MX1 is only masked by the parameter u. Before being processed by the final permutation circuit FPM, the masking by the parameter u is removed by the circuit XG21 from the word provided by the multiplexer MX1 and removed by the circuit XG22 from the word provided by the circuit XG12 through the multiplexer MX3.

Figure 18 represents an integrated circuit CT1 arranged on a portable medium HD such as a plastic card, and implementing one of the protection methods previously described, according to one embodiment. The integrated circuit comprises the same units as the integrated circuit CT described above in connection with Figure 1, and differs from the latter in that the coprocessor CP1 is replaced with a coprocessor CP2 implementing one and/or the other protection methods described above. Therefore, according to one embodiment, the coprocessor CP2 is configured to implement one of the circuit of Figures 5, 6, 13, 14 and 17, either by software or by hardware or a combination thereof.

The coprocessor CP2 may also be configured to execute a part of the cryptographic operation. In this case, the processor PRC is configured to produce output tables of resulting data including the result of the cryptographic operation, each output table being such that all data in it have a same probability of occurrence.

The methods disclosed herein may also be implemented by software programs executable by a computer system. Further, implementations may include distributed processing and parallel processing, especially for processing in parallel several or all data in the input data sets and/or for providing in parallel several or all data in the output data sets.

The illustrations described herein are intended to provide a general understanding of the structure of various embodiments. These illustrations are not intended to serve as a complete description of all of the elements and features of apparatus, processors and systems that utilizes the structures or methods described therein. Many other embodiments may be apparent to those of ordinary skills in the art upon reviewing the disclosure by combining the disclosed embodiments. Other embodiments may be utilized and derived from the disclosure, such that structural and logical substitutions and changes may be made without departing from the scope of the disclosure.

Further, the disclosure and the illustrations are to be considered as illustrative rather than restrictive, and the appended claims are intended to cover all such modifications, enhancements and other embodiments, which fall within the true spirit and scope of the description. Thus, the scope of the following claims is to be determined by the broadest permissible interpretation of the claims and their equivalents, and shall not be restricted or limited by the foregoing description.

In this respect, the masked substitution table can be computed once optionally by another processing unit and stored in a read-only memory M3 of the circuit CT1. Therefore, the operations for generating the mask parameters u, v, w, y, z, ... and the operations for generating the masked substitution tables SB1, SB2, SB3 and the masked round key tables KT1, KT2, KT2' and KT3 are not necessarily implemented in the circuit CT1. The initialization steps S30 to S32, S50 to S52, S70 to S72, S93 to S95, or S120 to S122 can be performed once possibly by another processing unit and the resultant substitution tables SB1, SB2 SB3, and the resultant masked round key tables KT1, KT2, KT2' and KT3 stored in the non-volatile memory M3 at the time the circuit CT1 is manufactured. Then step S32 or S35, S52 or S55, S72 or S75, S95, and S122 can be executed by the circuit without executing the previous steps S30 and S31, S50 and S51, S70 and S72, S93 and S94, or S120 and S121.

References cited

[1] P. C. Kocher, "Timing attacks on implementations of Diffie-Hellman, RSA, DSS, and other systems" In Neal Koblitz, editor, Advances in Cryptology - CRYPTO '96, volume 1109 of Lecture Notes in Computer Science, pages 104-113. Springer, 1996.

[2] P. C. Kocher, J. Jaffe, and B. Jun, "Differential Power Analysis" In M. J. Wiener, editor, Advances in Cryptology - CRYPTO '99, volume 1666 of Lecture Notes in Computer Science, pages 388-397. Springer, 1999.

[3] E. Brier, C. Clavier, and F. Olivier, "Correlation Power Analysis with a Leakage Model" In M. Joye and J-J. Quisquater, editors, Cryptographic Hardware and Embedded Systems - CHES 2004, volume 3156 of Lecture Notes in Computer Science, pages 16-29. Springer, 2004.

[4] J.-J. Quisquater, "ElectroMagnetic Analysis (EMA): Measures and Counter-measures for Smart Cards", Smart Card Programming and Security, Springer Berlin / Heidelberg, vol. 2140, 2001, p. 200-210

[5] S. Chari, J. R. Rao, and P. Rohatgi, "Template Attacks", Kaliski Jr., B.S., Koç, Ç.K., Paar, C. (eds.) CHES 2002. LNCS, vol. 2523, pp. 172-186. Springer, Heidelberg (2003)

[6] B. Gierlichs, L. Batina, P. Tuyls, and B. Preneel, "Mutual Information Analysis", CHES 2008, volume 5154 of LNCS, pages 426-442, Springer, 2008

**Claims**

1. A method for executing by a circuit (CT1) a substitution operation whereby an output data (SR1) is selected in an original substitution table (SBX) using an input data (D2) as an index, wherein the substitution operation is performed using a masked substitution table (SB1), the input data being combined by Exclusive OR (XOR) operations (⊕) with a first mask and the output data being combined by XOR operations with a second mask ,
**characterized in that** the masked substitution table is generated by performing a plurality of successive iterations, a first iteration of the plurality of iterations comprising generating a masked substitution table (SB1) from the original substitution table, each of subsequent iterations of the successive iterations after the first iteration comprising generating a masked substitution table (SB1) from a previous masked substitution table (SB0) generated by a previous iteration of the successive iterations, the first iteration being performed in a protected area, each iteration comprising:

selecting a first and a second input mask (U, V);
computing a next value of a first mask parameter by applying XOR operations to a previous value (u0) of the first mask parameter and to the first input mask;
computing a next value of a second mask parameter by applying XOR operations to a previous value (v0) of the second mask parameter and to the second input mask, the previous values of the first and second mask parameters being set to zero in the first iteration;
selecting each value in the previous masked substitution table (SB0); and for each selected value (SB0[i], SB0[i⊕U]):

computing a masked value (SB0[i]⊕V, SB0[i⊕U]⊕V) by applying XOR operations to the selected value and to the second input mask (V),
computing a masked index (i⊕U) by applying XOR operations to the first mask (U) and to an original index (i), and
storing the masked value in the masked substitution table, the selected value being selected at the original index and the masked value being stored at the masked index, or the selected value being selected at the masked index and the masked value being stored at the original index,

the substitution operation being performed using the masked substitution table (SB1) generated in a last iteration of the successive iterations, the substitution operation being applied to the input data combined by XOR operations with the next value (u1) of the first mask parameter (u), computed in the last iteration, the output data (MSR2) of the masked substitution operation being equal to the output data of the substitution operation combined by XOR operations with the next value (v1) of the second mask parameter (v), computed in the last iteration.

2. The method of claim 1, wherein the new masked substitution table is generated by:

selecting third input masks (W, Z) of rank j for each of ranks from j=1 to n, n being an integer number greater than zero,
for each rank j from j=1 to n-1, computing a new value of a third mask parameter (w, z) of rank j by applying XOR operations to the previous value of the third mask parameter of rank j and to the third input masks of ranks j and j+1, and
computing a new value of a third mask parameter (w, z) of rank n by applying XOR operations to a previous value of the third mask parameter of rank n and to the third input mask of rank n, the new value of the first mask parameter (u) being computed by applying XOR operations to the previous value of the first mask parameter, to the third input mask of rank one (W) and to the first input mask (U), the new value of the second mask parameter (v) being computed by applying XOR operations to the previous value of the second mask parameter, to the third input mask of rank one and to the second input mask (V), the substitution operation comprising applying XOR operations to the masked input data (MD1) and to each of the third mask parameters of ranks one to n (w, z), the masked output data (MSR2) corresponding to the output data (SR2) of the substitution operation, combined by XOR operations with the second mask parameter (v) and with each of the third mask parameters of ranks one to n.

3. The method of claim 1, wherein the new masked substitution table is generated by:

selecting third and fourth input masks (W, Y) of rank j, for each of ranks from j=1 to n, n being an integer number greater than zero;
for each rank j from j=1 to n-1, computing a new value of a third mask parameter (w) of rank j by applying XOR operations to the previous value of the third mask parameter of rank j and to the third input masks of ranks j and j+1, and computing a new value of a fourth mask parameter (y) of rank j by applying XOR operations to the previous value of fourth mask parameter of rank j and to the fourth input masks of ranks j and j+1;
computing a new value of a third mask parameter of rank n (w) by applying XOR operations to a previous value of the third mask parameter of rank n and to the third input mask of rank n; and
computing a new value of a fourth mask parameter of rank n (y) by applying XOR operations to a previous value of the fourth mask parameter of rank n and to the fourth input mask of rank n;

the new value of the first mask parameter (u) being obtained by applying XOR operations to the previous value of the first mask parameter, to the third input mask of rank one (W) and to the first input mask (U), the new value of the second mask parameter (v) being obtained by applying XOR operations to the previous value of the second mask parameter, to the fourth input mask of rank one (Y) and to the second input mask (V), the substitution operation comprising applying XOR operations to the masked input data (MD1) and to each of the third mask parameters (w) of ranks one to n, the masked output data (MSR2) corresponding to the output data (SR2) of the substitution operation, combined by XOR operations with the second mask parameter (v) and with each of the fourth mask parameters (y) of ranks one to n.

4. The method of one of claims 1 to 3, wherein the input masks (U, V, W, Y, Z) are randomly selected.

5. The method of one of claims 1 to 4, wherein the data in the masked substitution table (SB1) are computed in a random order.

6. A method for encrypting or decrypting an input data (X1) according to a cryptographic algorithm comprising a substitution operation, wherein the substitution operation is performed according to the method of one of claims 1 to 5.

7. The method of claim 6, wherein the cryptographic algorithm conforms with the Advanced Encryption Standard (AES), the method comprising:

computing a masked input data ($X1 \oplus u$) by applying XOR operations to the input data (X1) and to the new value of the first mask parameter (u);
computing a first masked round input data (X3<0>) by applying XOR operations to the masked input data and to a first round key (KT[0]);
performing several rounds, each comprising:

performing a substitution operation applied to a previously computed masked round input data (X3<j>) and using the new masked substitution table (SB1),
computing a masked round input data (X3<j>) by applying XOR operations to an output data (X5<j>) of an AES column-based permutation operation (MXC), to a corresponding round key (KT[j]), and to the new values of the first mask parameter (u) and the second mask parameter (v); and

performing a last round comprising:

computing a substitution output data (X9<R>) by performing a substitution operation using the new masked substitution table, receiving as input a previously computed masked round input data (X3<R>), and
computing a masked output data (X9<R>) by applying XOR operations to the masked substitution output data and to a corresponding round key (KT[R]), an output data (CX1) resulting from processing the input data by the cryptographic algorithm being obtained by applying XOR operations to the masked output data and to the new value of the second mask parameter.

8. The method of claim 7, wherein the round keys (KT[j]) are masked round keys ($KT[j] \oplus w$), the method comprising:

selecting a third input mask (W), and
computing a new value of a third mask parameter by applying XOR operations to a previous value of the third mask parameter and to the third input mask, the new value of the first mask parameter (u) being computed by applying XOR operations to the previous value of the first mask parameter and to the third and first input masks (W, U), the new value of the second mask parameter (v) being computed by applying XOR operations to the previous value of the second mask parameter and to the third and second input masks (W, V), new masked round keys being each obtained by applying XOR operations to the new value of the third mask parameter (w) and to a previous round key (KT[j]), the new masked substitution table being generated by using the new values of the first and second mask parameters,

the substitution operation comprising applying XOR operations to the masked input data (MD1) and to the new value of the third mask parameter (w), the masked output data (MSR2) corresponding to the output data (SR2) of the substitution operation, combined by XOR operations with the second mask parameter (v) and with the new value of the third mask parameter.

9. The method of claim 6, wherein the cryptographic algorithm conforms with the Data Encryption Standard (DES), the method comprising:
performing several rounds, each comprising:

computing a masked round data by applying XOR operations to an output data of a DES expansion operation and to the new value of the first mask parameter (u);
performing a substitution operation from the masked round data using new masked substitution tables (SB1), the substitution operation providing a masked substitution output data masked by the new value of the second mask parameter (v), and
computing an unmasked substitution output data by applying XOR operations to the masked substitution output data and to the new value of the second parameter (v).

10. The method of claim 9, wherein the generation of the new masked substitution tables comprises:

selecting a third and a fourth input mask (W, Y), and
computing a new value of a third mask parameter by applying XOR operations to a previous value of the third mask parameter and to the third input mask, the new value of the first mask parameter (u) being computed by applying XOR operations to previous value of the first mask parameter and to the third and first input masks (W, U),
computing new values of a fourth mask parameter by applying XOR operations to a previous value of the fourth mask parameter and to the fourth input mask, the new value of the second mask parameter (v) being computed by applying XOR operations to the previous value of the second mask parameter and to the fourth and second input masks (W, V),
computing a transformed first input mask by applying to the first input mask (U) the DES expansion operation (E); and
computing a transformed second input mask by applying a reverse DES permutation operation ($P^{-1}$) to the second input mask (V), the new masked substitution tables being generated using as the first and second input masks the transformed first and second input masks, the method comprising using masked round keys (KT1[j]) obtained by applying XOR operations to DES round keys (KT[j]) and to transformed third and fourth input masks obtained by applying the DES expansion operation (E) to third and fourth input masks (W, Y), and using the new values of third and fourth mask parameters (w, y).

11. A circuit (CT1) comprising a processor (PRC) and configured to implement the method according to one of claims 1 to 10.

12. The circuit of claim 11, comprising a coprocessor (CP2).

13. A device comprising a circuit according to claim 11 or 12, arranged on a medium (HD).

14. A computer program product directly loadable into an internal memory of a computer and comprising code portions which when executed by a computer configure the computer to carry out the steps of the method according to one of claims 1 to 10.

**Patentansprüche**

1. Verfahren zum Ausführen eines Substitutionsablaufs durch eine Schaltung (CT1), wodurch Ausgabedaten (SR1) in einer ursprünglichen Substitutionstabelle (SBX) unter Verwendung von Eingabedaten (D2) als einen Index ausgewählt werden, wobei der Substitutionsablauf unter Verwendung einer maskierten Substitutionstabelle (SB1) durchgeführt wird, wobei die Eingabedaten durch Exklusiv-ODER (Exclusive OR - XOR)-Abläufe (⊕) mit einer ersten Maske kombiniert werden und die Ausgabedaten durch XOR-Abläufe mit einer zweiten Maske kombiniert werden, **dadurch gekennzeichnet, dass** die maskierte Substitutionstabelle durch Durchführen mehrerer aufeinanderfolgender Iterationen erzeugt wird, wobei eine erste Iteration der mehreren Iterationen das Erzeugen einer maskierten Substitutionstabelle (SB1) aus der ursprünglichen Substitutionstabelle umfasst, wobei jede von nachfolgenden Iterationen der aufeinanderfolgenden Iterationen nach der ersten Iteration das Erzeugen einer maskierten Substitutionstabelle (SB1) aus einer vorherigen maskierten Substitutionstabelle (SB0) umfasst, die durch eine vorherige Iteration der aufeinanderfolgenden Iterationen erzeugt wird, wobei jede Iteration Folgendes umfasst:

Auswählen einer ersten und einer zweiten Eingabemaske (U, V);

Berechnen eines nächsten Werts eines ersten Maskenparameters durch Anwenden von XOR-Abläufen auf einen vorherigen Wert (u0) des ersten Maskenparameters und auf die erste Eingabemaske;

Berechnen eines nächsten Werts eines zweiten Maskenparameters durch Anwenden von XOR-Abläufen auf einen vorherigen Wert (v0) des zweiten Maskenparameters und auf die zweite Eingabemaske, wobei die vorherigen Werte des ersten und des zweiten Maskenparameters in der ersten Iteration auf null gesetzt werden;

Auswählen jedes Werts in der vorherigen maskierten Substitutionstabelle (SB0); und für jeden ausgewählten Wert (SB0[i], SB0[i⊕U]):

Berechnen eines maskierten Werts (SB0[i]⊕V, SB0[i⊕U]⊕V) durch Anwenden von XOR-Abläufen auf den ausgewählten Wert und auf die zweite Eingabemaske (V),

Berechnen eines maskierten Index (i⊕U[m]) durch Anwenden von XOR-Abläufen auf die erste Maske (U) und auf einen ursprünglichen Index (i), und

Speichern der maskierten Daten in der maskierten Substitutionstabelle, wobei der ausgewählte Wert an dem ursprünglichen Index ausgewählt wird und der maskierte Wert an dem maskierten Index gespeichert wird, oder der ausgewählte Wert an dem maskierten Index ausgewählt wird und der maskierte Wert an dem ursprünglichen Index gespeichert wird,

wobei der Substitutionsablauf unter Verwendung der maskierten Substitutionstabelle (SB1) durchgeführt wird, die in einer letzten Iteration der aufeinanderfolgenden Iterationen erzeugt wird, wobei der Substitutionsablauf auf die Eingabedaten angewendet wird, die durch XOR-Abläufe mit dem nächsten Wert (u1) des ersten Maskenparameters (u) kombiniert werden, der in der letzten Iteration berechnet wird, wobei die Ausgabedaten (MSR2) des maskierten Substitutionsablaufs gleich den Ausgabedaten (SR2) des Substitutionsablaufs sind, die durch XOR-Abläufe mit dem nächsten Wert (v1) des zweiten Maskenparameters (v) kombiniert werden, der in der letzten Iteration berechnet wird.

2. Verfahren nach Anspruch 1, wobei die neue maskierte Substitutionstabelle durch Folgendes erzeugt wird:

Auswählen von dritten Eingabemasken (W, Z) von Rang j für jeden der Ränge von j=1 bis n, wobei n eine ganze Zahl größer als null ist,

für jeden Rang j von j=1 bis n-1, Berechnen eines neuen Werts eines dritten Maskenparameters (w, z) von Rang j durch Anwenden von XOR-Abläufen auf den vorherigen Wert des dritten Maskenparameters von Rang j und auf die dritten Eingabemasken der Ränge j und j+1, und

Berechnen eines neuen Werts eines dritten Maskenparameters (w, z) von Rang n durch Anwenden von XOR-Abläufen auf einen vorherigen Wert des dritten Maskenparameters von Rang n und auf die dritte Eingabemaske von Rang n, wobei der neue Wert des ersten Maskenparameters (u) durch Anwenden von XOR-Abläufen auf den vorherigen Wert des ersten Maskenparameters, auf die dritte Eingabemaske von Rang eins (W) und auf die erste Eingabemaske (U) berechnet wird, wobei der neue Wert des zweiten Maskenparameters (v) durch Anwenden von XOR-Abläufen auf den vorherigen Wert des zweiten Maskenparameters, auf die dritte Eingabemaske von Rang eins und auf die zweite Eingabemaske (V) berechnet wird, wobei der Substitutionsablauf das Anwenden von XOR-Abläufen auf die maskierten Eingabedaten (MD1) und auf jeden der dritten Maskenparameter der Ränge eins bis n (w, z) umfasst, wobei die maskierten Ausgabedaten (MSR2) den Ausgabedaten (SR2) des Substitutionsablaufs entsprechen, die durch XOR-Abläufe mit dem zweiten Maskenparameter (v) und mit jedem der dritten Maskenparameter der Ränge eins bis n kombiniert werden.

3. Verfahren nach Anspruch 1, wobei die neue maskierte Substitutionstabelle durch Folgendes erzeugt wird:

Auswählen der dritten und einer vierten Eingabemaske (W, Y) von Rang j für jeden der Ränge von j=1 bis n, wobei n eine ganze Zahl größer als null ist;

für jeden Rang j von j=1 bis n-1, Berechnen eines neuen Werts eines dritten Maskenparameters (w) von Rang j durch Anwenden von XOR-Abläufen auf den vorherigen Wert des dritten Maskenparameters von Rang j und auf die dritten Eingabemasken der Ränge j und j+1, und Berechnen eines neuen Werts eines vierten Maskenparameters (y) von Rang j durch Anwenden von XOR-Abläufen auf den vorherigen Wert des vierten Maskenparameters von Rang j und auf die vierten Eingabemasken der Ränge j und j+1;

Berechnen eines neuen Werts eines dritten Maskenparameters von Rang n (w) durch Anwenden von XOR-Abläufen auf einen vorherigen Wert des dritten Maskenparameters von Rang n und auf die dritte Eingabemaske von Rang n; und

Berechnen eines neuen Werts eines vierten Maskenparameters von Rang n (y) durch Anwenden von XOR-Abläufen auf einen vorherigen Wert des vierten Maskenparameters von Rang n und auf die vierte Eingabemaske von Rang n;

wobei der neue Wert des ersten Maskenparameters (u) durch Anwenden von XOR-Abläufen auf den vorherigen Wert des ersten Maskenparameters, auf die dritte Eingabemaske von Rang eins (W) und auf die erste Eingabemaske (U) erhalten wird, wobei der neue Wert des zweiten Maskenparameters (v) durch Anwenden von XOR-Abläufen auf den vorherigen Wert des zweiten Maskenparameters, auf die vierte Eingabemaske von Rang eins (Y) und auf die zweite Eingabemaske (V) erhalten wird, wobei der Substitutionsablauf das Anwenden von XOR-Abläufen auf die maskierten Eingabedaten (MD1) und auf jeden der dritten Maskenparameter (w) der Ränge eins bis n umfasst, wobei die maskierten Ausgabedaten (MSR2) den Ausgabedaten (SR2) des Substitutionsablaufs entsprechen, die durch XOR-Abläufe mit dem zweiten Maskenparameter (v) und mit jedem der vierten Maskenparameter (y) der Ränge eins bis n kombiniert werden.

4. Verfahren nach einem der Ansprüche 1 bis 3, wobei die Eingabemasken (U, V, W, Y, Z) zufällig ausgewählt werden.

5. Verfahren nach einem der Ansprüche 1 bis 4, wobei die Daten in der maskierten Substitutionstabelle (SB1) in einer zufälligen Reihenfolge berechnet werden.

6. Verfahren zum Verschlüsseln oder Entschlüsseln von Eingabedaten (X1) gemäß einem kryptografischen Algorithmus, das einen Substitutionsablauf umfasst, wobei der Substitutionsablauf gemäß dem Verfahren nach einem der Ansprüche 1 bis 5 durchgeführt wird.

7. Verfahren nach Anspruch 6, wobei der kryptografische Algorithmus mit dem Advanced-Encryption-Standard(AES)-Algorithmus übereinstimmt, wobei das Verfahren Folgendes umfasst:

Berechnen maskierter Eingabedaten (X1⊕u) durch Anwenden von XOR-Abläufen auf die Eingabedaten (X1) und auf den neuen Wert des ersten Maskenparameters (u);
Berechnen von ersten maskierten Rundeneingabedaten (X3<0>) durch Anwenden von XOR-Abläufen auf die maskierten Eingabedaten und auf einen ersten Rundenschlüssel (KT[0]);
Durchführen mehrerer Runden, wobei jede Folgendes umfasst:

Durchführen eines Substitutionsablaufs, der auf vorher berechnete Rundeneingabedaten (X3<j>) angewendet wird, und Verwenden der neuen maskierten Substitutionstabelle (SB1),
Berechnen von maskierten Rundeneingabedaten (X3<j>) durch Anwenden von XOR-Abläufen auf Ausgabedaten (X5<j>) eines spaltenbasierten AES-Permutationsablaufs (MXC), auf einen entsprechenden Rundenschlüssel (KT[j]) und auf die neuen Werte des ersten Maskenparameters (u) und des zweiten Maskenparameters (v); und

Durchführen einer letzten Runde, die Folgendes umfasst:

Berechnen von Substitutionsausgabedaten (X9<R>) durch Durchführen eines Substitutionsablaufs unter Verwendung der neuen maskierten Substitutionstabelle, Empfangen von vorher berechneten maskierten Rundeneingabedaten (X3<R>) als Eingabe, und
Berechnen maskierter Ausgabedaten (X9<R>) durch Anwenden von XOR-Abläufen auf die maskierten Substitutionsausgabedaten und auf einen entsprechenden Rundenschlüssel (KT[R]), wobei sich Ausgabedaten (CX1) aus einer Verarbeitung der Eingabedaten durch den kryptografischen Algorithmus ergeben, die durch das Anwenden von XOR-Abläufen auf die maskierten Ausgabedaten und auf den neuen Wert des zweiten Maskenparameters erhalten werden.

8. Verfahren nach Anspruch 7, wobei die Rundenschlüssel (KT[j]) maskierte Rundenschlüssel (KT[j]⊕w) sind, wobei das Verfahren Folgendes umfasst:

Auswählen einer dritten Eingabemaske (W), und
Berechnen eines neuen Werts eines dritten Maskenparameters durch Anwenden von XOR-Abläufen auf einen vorherigen Wert des dritten Maskenparameters und auf die dritte Eingabemaske, wobei der neue Wert des ersten Maskenparameters (u) durch Anwenden von XOR-Abläufen auf den vorherigen Wert des ersten Maskenparameters und auf die dritte und die erste Eingabemaske (W, U) berechnet wird, wobei der neue Wert des zweiten Maskenparameters (v) durch Anwenden von XOR-Abläufen auf den vorherigen Wert des zweiten Maskenparameters und auf die dritte und die zweite Eingabemaske (W, V) berechnet wird, wobei neue maskierte Rundenschlüssel jeweils durch Anwenden von XOR-Abläufen auf den neuen Wert des dritten Maskenparameters (w) und auf einen vorherigen Rundenschlüssel (KT[j]) erhalten werden, wobei die neue maskierte Substitutionstabelle durch Verwenden der neuen Werte des ersten und des zweiten Maskenparameters erzeugt wird, wobei der Substitutionsablauf das Anwenden von XOR-Abläufen auf die maskierten Eingabedaten (MD1) und auf den neuen Wert des dritten Maskenparameters (w) umfasst, wobei die maskierten Ausgabedaten (MSR2) den Ausgabedaten (SR2) des Substitutionsablaufs entsprechen, die durch XOR-Abläufe mit dem zweiten Maskenparameter (v) und mit dem neuen Wert des dritten Maskenparameters kombiniert werden.

9. Verfahren nach Anspruch 6, wobei der kryptografische Algorithmus mit dem Data-Encryption-Standard(DES)-Algorithmus übereinstimmt, wobei das Verfahren Folgendes umfasst:
Durchführen mehrerer Runden, wobei jede Folgendes umfasst:

Berechnen maskierter Rundendaten durch Anwenden von XOR-Abläufen auf Ausgabedaten eines DES-Erweiterungsablaufs und auf den neuen Wert des ersten Maskenparameters (u);
Durchführen eines Substitutionsablaufs aus den maskierten Rundendaten unter Verwendung neuer maskierter Substitutionstabellen (SB1), wobei der Substitutionsablauf maskierte Substitutionsausgabedaten bereitstellt, die durch den neuen Wert des zweiten Maskenparameters (v) maskiert sind, und
Berechnen nicht maskierter Substitutionsausgabedaten durch Anwenden von XOR-Abläufen auf die maskierten Substitutionsausgabedaten und auf den neuen Wert des zweiten Parameters (v).

10. Verfahren nach Anspruch 9, wobei die Erzeugung der neuen maskierten Substitutionstabellen Folgendes umfasst:

Auswählen einer dritten und einer vierten Eingabemaske (W, Y), und
Berechnen eines neuen Werts eines dritten Maskenparameters durch Anwenden von XOR-Abläufen auf einen vorherigen Wert des dritten Maskenparameters und auf die dritte Eingabemaske, wobei der neue Wert des ersten Maskenparameters (u) durch Anwenden von XOR-Abläufen auf den vorherigen Wert des ersten Maskenparameters und auf die dritte und die erste Eingabemaske (W, U) berechnet wird,
Berechnen neuer Werte eines vierten Maskenparameters durch Anwenden von XOR-Abläufen auf einen vorherigen Wert des vierten Maskenparameters und auf die vierte Eingabemaske, wobei der neue Wert des zweiten Maskenparameters (v) durch Anwenden von XOR-Abläufen auf den vorherigen Wert des zweiten Maskenparameters und auf die vierte und die zweite Eingabemaske (W, V) berechnet wird,
Berechnen einer transformierten ersten Eingabemaske durch Anwenden des DES-Erweiterungsablaufs (E) auf die erste Eingabemaske (U); und
Berechnen einer transformierten zweiten Eingabemaske durch Anwenden eines umgekehrten DES-Permutationsablaufs (P$^{-1}$) auf die zweite Eingabemaske (V), wobei die neuen maskierten Substitutionstabellen unter Verwendung der ersten und der zweiten transformierten Eingabemaske als die erste und die zweite Eingabemaske erzeugt werden, wobei das Verfahren das Verwenden von maskierten Rundenschlüsseln (KT1[j]), die durch das Anwenden von XOR-Abläufen auf DES-Rundenschlüssel (KT[j]) und auf die dritte und die vierte transformierte Eingabemaske erhalten werden, die durch das Anwenden der DES-Erweiterungsablaufs (E) auf die dritte und die vierte Eingabemaske (W, Y) erhalten werden, und das Verwenden der neuen Werte des dritten und des vierten Maskenparameters (w, y) umfasst.

11. Schaltung (CT1), die einen Prozessor (PRC) umfasst und konfiguriert ist, um das Verfahren nach einem der Ansprüche 1 bis 10 zu implementieren.

12. Schaltung nach Anspruch 11, die einen Coprozessor (CP2) umfasst.

13. Vorrichtung, die eine Schaltung nach Anspruch 11 oder 12 umfasst, die auf einem Medium (HD) angeordnet ist.

14. Computerprogrammprodukt, das in einen internen Speicher eines Computers direkt ladbar ist und Codeabschnitte umfasst, die, wenn sie durch einen Computer ausgeführt werden, den Computer konfigurieren, um die Schritte des Verfahrens nach einem der Ansprüche 1 bis 10 vorzunehmen.

**Revendications**

1. Procédé pour exécuter, par un circuit (CT1), une opération de substitution par laquelle une donnée de sortie (SR1) est sélectionnée dans une table de substitution d'origine (SBX) à l'aide d'une donnée d'entrée (D2) en tant qu'indice, l'opération de substitution étant effectuée à l'aide d'une table de substitution masquée (SB1), les données d'entrée étant combinées par des opérations fonction OU exclusif (⊕) avec un premier masque et les données de sortie étant combinées par des opérations XOR avec un second masque,
**caractérisé en ce que** la table de substitution masquée est générée en effectuant une pluralité d'itérations successives, une première itération de la pluralité d'itérations comprenant la génération d'une table de substitution masquée (SB1) à partir de la table de substitution d'origine, chacune des itérations suivantes des itérations successives après la première itération comprenant la génération d'une table de substitution masquée (SB1) à partir d'une table de substitution masquée précédente (SB0) générée par une itération précédente des itérations successives, chaque itération comprenant :

la sélection d'un premier et d'un deuxième masque d'entrée (U, V) ;
le calcul d'une valeur suivante d'un premier paramètre de masque en appliquant des opérations XOR à une valeur précédente (u0) du premier paramètre de masque et au premier masque d'entrée ;
le calcul d'une valeur suivante d'un deuxième paramètre de masque en appliquant des opérations XOR à une valeur précédente (v0) du deuxième paramètre de masque et au deuxième masque d'entrée, les valeurs précédentes des premier et deuxième paramètres de masque étant définies à zéro dans la première itération ;
la sélection de chaque valeur dans la table de substitution masquée précédente (SB0) ; et pour chaque valeur sélectionnée (SB0[i], SB[i⊕U]) :

le calcul d'une valeur masquée (SB0[i]⊕V, SB0[i⊕U]⊕V) en appliquant des opérations XOR à la valeur sélectionnée et au deuxième masque d'entrée (V),
le calcul d'un indice masqué (i⊕U) en appliquant des opérations XOR au premier masque (U) et à un indice d'origine (i), et
le stockage de la valeur masquée dans la table de substitution masquée, la valeur sélectionnée étant sélectionnée au niveau de l'indice d'origine et la valeur masquée étant stockée au niveau de l'indice masqué, ou la valeur sélectionnée étant sélectionnée au niveau de l'indice masqué et la valeur masquée étant stockée au niveau de l'indice d'origine,
l'opération de substitution étant effectuée à l'aide de la table de substitution masquée (SB1) générée dans une dernière itération des itérations successives, l'opération de substitution étant appliquée aux données d'entrée combinées par des opérations XOR avec la valeur suivante (u1) du premier paramètre de masque (u), calculées dans la dernière itération, les données de sortie (MSR2) de l'opération de substitution masquée étant égales aux données de sortie (SR2) de l'opération de substitution combinées par les opérations XOR avec la valeur suivante (v1) du deuxième paramètre de masque (v), calculé dans la dernière itération.

2. Procédé selon la revendication 1, la nouvelle table de substitution masquée étant générée par :

sélection de troisièmes masques d'entrée (W, Z) de rang j pour chacun des rangs de j = 1 à n, n étant un nombre entier supérieur à zéro,
pour chaque rang j de j = 1 à n - 1, calcul d'une nouvelle valeur d'un troisième paramètre de masque (w, z) de rang j en appliquant des opérations XOR à la valeur précédente du troisième paramètre de masque de rang j et au troisième des masques d'entrée de rangs j et j + 1, et
calcul d'une nouvelle valeur d'un troisième paramètre de masque (w, z) de rang n en appliquant des opérations XOR à une valeur précédente du troisième paramètre de masque de rang n et au troisième masque d'entrée de rang n, la nouvelle valeur du premier masque (u) étant calculée en appliquant des opérations XOR à la valeur précédente du premier paramètre de masque, au troisième masque d'entrée de rang un (W) et au premier masque d'entrée (II), la nouvelle valeur du deuxième paramètre de masque (v) étant calculée en appliquant des opérations XOR à la valeur précédente du deuxième paramètre de masque, au troisième masque d'entrée de rang un et au deuxième masque d'entrée (V), l'opération de substitution comprenant l'application d'opérations XOR aux données d'entrée masquées (MD1) et à chacun des troisièmes paramètres de masque de rangs un à n (w, z), les données de sortie masquées (MSR2) correspondant aux données de sortie (SR2) de l'opération de substitution, combinées par des opérations XOR avec le deuxième paramètre de masque (v) et avec chacun des troisièmes paramètres de masque de rangs un à n.

3. Procédé selon la revendication 1, la nouvelle table de substitution masquée étant générée par :

sélection des troisième et quatrième masques d'entrée (W, Y) de rang j, pour chacun des rangs de j = 1 à n, n étant un nombre entier supérieur à zéro ;
pour chaque rang j de j = 1 à n - 1, calcul d'une nouvelle valeur d'un troisième paramètre de masque (w) de rang j en appliquant des opérations XOR à la valeur précédente du troisième paramètre de masque de rang j et aux troisièmes masques d'entrée des rangs j et j + 1, et calcul d'une nouvelle valeur d'un quatrième paramètre de masque (y) de rang j en appliquant des opérations XOR à la valeur précédente du quatrième paramètre de masque de rang j et aux quatrièmes masques d'entrée de rangs j et j + 1 ;

calcul d'une nouvelle valeur d'un troisième paramètre de masque de rang n (w) en appliquant des opérations XOR à une valeur précédente du troisième paramètre de masque de rang n et au troisième masque d'entrée de rang n ; et

calcul d'une nouvelle valeur d'un quatrième paramètre de masque de rang n (y) en appliquant des opérations XOR à une valeur précédente du quatrième paramètre de masque de rang n et au quatrième masque d'entrée de rang n ;

la nouvelle valeur du premier paramètre de masque (u) étant obtenue en appliquant des opérations XOR à la valeur précédente du premier paramètre de masque, au troisième masque d'entrée de rang un (W) et au premier masque d'entrée (U), la nouvelle valeur du deuxième paramètre de masque (v) étant obtenue en appliquant des opérations XOR à la valeur précédente du deuxième paramètre de masque, au quatrième masque d'entrée de rang un (Y) et au deuxième masque d'entrée (V), l'opération de substitution comprenant l'application d'opérations XOR aux données d'entrée masquées (MD1) et à chacun des troisièmes paramètres de masque (w) de rangs un à n, les données de sortie masquées (MSR2) correspondant aux données de sortie (SR2) de l'opération de substitution, combinées par des opérations XOR avec le deuxième paramètre de masque (v) et avec chacun des quatrièmes paramètres de masque (y) de rangs un à n.

4. Procédé selon l'une des revendications 1 à 3, les masques d'entrée (U, V, W, Y, Z) étant sélectionnés de manière aléatoire.

5. Procédé selon l'une des revendications 1 à 4, les données dans la table de substitution masquée (SB1) étant calculées dans un ordre aléatoire.

6. Procédé de chiffrement ou de déchiffrement d'une donnée d'entrée (X1) selon un algorithme cryptographique comprenant une opération de substitution, l'opération de substitution étant effectuée selon le procédé de l'une des revendications 1 à 5.

7. Procédé selon la revendication 6, l'algorithme cryptographique étant conforme à la norme de chiffrement avancée (AES), le procédé comprenant :

le calcul d'une donnée d'entrée masquée (X1⊕u) en appliquant des opérations XOR aux données d'entrée (X1) et à la nouvelle valeur du premier paramètre de masque (u) ;

le calcul d'une première donnée d'entrée de tour masquée (X3 <0>) en appliquant des opérations XOR aux données d'entrée masquées et à une première clé de tour (KT[0]) ;

le fait d'effectuer plusieurs tours, chacun comprenant :

le fait d'effectuer une opération de substitution appliquée à une donnée d'entrée de tour masquée précédemment calculée (X3 <j>) et l'utilisation de la nouvelle table de substitution masquée (SB1),

le calcul d'une donnée d'entrée de tour masquée (X3 <j>) en appliquant des opérations XOR à une donnée de sortie (X5 <j>) d'une opération de permutation basée sur des colonnes AES (MXC), à une clé de tour correspondante (KT[j]), et aux nouvelles valeurs du premier paramètre de masque (u) et du deuxième paramètre de masque (v) ; et

le fait d'effectuer un dernier tour comprenant :

le calcul d'une donnée de sortie de substitution (X9 <R>) en effectuant une opération de substitution à l'aide de la nouvelle table de substitution masquée, la réception, en tant qu'entrée, d'une donnée d'entrée de tour masquée précédemment calculée (X3 <R>), et

le calcul d'une donnée de sortie masquée (X9 <R>) en appliquant des opérations XOR aux données de sortie de substitution masquées et à une clé de tour correspondante (KT[R]), une donnée de sortie (CX1) résultant du traitement des données d'entrée par l'algorithme cryptographique étant obtenue en appliquant des opérations XOR aux données de sortie masquées et à la nouvelle valeur du deuxième paramètre de masque.

8. Procédé selon la revendication 7, les clés de tour (KT[j]) étant des clés de tour masquées (KT[j]⊕w), le procédé comprenant :

la sélection d'un troisième masque d'entrée (W), et

le calcul d'une nouvelle valeur d'un troisième paramètre de masque en appliquant des opérations XOR à une valeur précédente du troisième paramètre de masque et au troisième masque d'entrée, la nouvelle valeur du premier paramètre de masque (u) étant calculée en appliquant des opérations XOR à la valeur précédente du premier paramètre de masque et aux troisième et premier masques d'entrée (W, U), la nouvelle valeur du deuxième paramètre de masque (v) étant calculée en appliquant des opérations XOR à la valeur précédente du deuxième paramètre de masque et aux troisième et deuxième masques d'entrée (W, V), de nouvelles clés de tour masquées étant chacune obtenues en appliquant des opérations XOR à la nouvelle valeur du troisième paramètre de masque (w) et à une clé de tour précédente (KT[j]), la nouvelle table de substitution masquée étant générée à l'aide des nouvelles valeurs des premier et deuxième paramètres de masque, l'opération de substitution comprenant l'application d'opérations XOR aux données d'entrée masquées (MD1) et à la nouvelle valeur du troisième paramètre de masque (w), les données de sortie masquées (MSR2) correspondant aux données de sortie (SR2) de l'opération de substitution, combinées par des opérations XOR avec le deuxième paramètre de masque (v) et avec la nouvelle valeur du troisième paramètre de masque.

**9.** Procédé selon la revendication 6, l'algorithme cryptographique étant conforme à la norme de chiffrement de données (DES), le procédé comprenant :
le fait d'effectuer plusieurs tours, chacun comprenant :

le calcul d'une donnée de tour masquée en appliquant des opérations XOR à une donnée de sortie d'une opération d'expansion DES et à la nouvelle valeur du premier paramètre de masque (u) ;

le fait d'effectuer une opération de substitution à partir des données de tour masquées à l'aide de nouvelles tables de substitution masquées (SB1), l'opération de substitution fournissant une donnée de sortie de substitution masquée, masquée par la nouvelle valeur du deuxième paramètre de masque (v), et

le calcul d'une donnée de sortie de substitution non masquée en appliquant des opérations XOR aux données de sortie de substitution masquées et à la nouvelle valeur du deuxième paramètre (v).

**10.** Procédé selon la revendication 9, la génération des nouvelles tables de substitution masquées comprenant :

la sélection d'un troisième et d'un quatrième masque d'entrée (W, Y), et

le calcul d'une nouvelle valeur d'un troisième paramètre de masque en appliquant des opérations XOR à une valeur précédente du troisième paramètre de masque et au troisième masque d'entrée, la nouvelle valeur du premier paramètre de masque (u) étant calculée en appliquant des opérations XOR à la valeur précédente du premier paramètre de masque et aux troisième et premier masques d'entrée (W, U),

le calcul de nouvelles valeurs d'un quatrième paramètre de masque en appliquant des opérations XOR à une valeur précédente du quatrième paramètre de masque et au quatrième masque d'entrée, la nouvelle valeur du deuxième paramètre de masque (v) étant calculée en appliquant des opérations XOR à la valeur précédente du deuxième paramètre de masque et aux quatrième et deuxième masques d'entrée (W, V),

le calcul d'un premier masque d'entrée transformé en appliquant, au premier masque d'entrée (U), l'opération d'extension DES (E) ; et

le calcul d'un deuxième masque d'entrée transformé en appliquant une opération de permutation DES inverse (P$^{-1}$) au deuxième masque d'entrée (V), les nouvelles tables de substitution masquées étant générées à l'aide, en tant que premier et deuxième masques d'entrée, des premier et deuxième masques d'entrée transformés, le procédé comprenant l'utilisation de clés de tour masquées (KT1[j]) obtenues en appliquant des opérations XOR aux clés de tour DES (KT[j]) et aux troisième et quatrième masques d'entrée transformés obtenus en appliquant l'opération d'expansion DES (E) aux troisième et quatrième masques d'entrée (W, Y) et l'utilisation des nouvelles valeurs des troisième et quatrième paramètres de masque (w, y).

**11.** Circuit (CT1) comprenant un processeur (PRC) et configuré pour mettre en œuvre le procédé selon l'une des revendications 1 à 10.

**12.** Circuit selon la revendication 11, comprenant un coprocesseur (CP2).

**13.** Dispositif comprenant un circuit selon l'une des revendications 11 à 12, agencé sur un support (HD).

**14.** Produit-programme d'ordinateur pouvant être chargé dans une mémoire interne d'un ordinateur et comprenant des parties de code qui, lorsqu'elles sont exécutées par un ordinateur, configurent l'ordinateur pour réaliser les étapes du procédé selon l'une des revendications 1 à 10.

Fig. 1

Fig. 2

Fig. 2A

CPSB(SB0,u0,v0,SB1,u1,v1)

Fig. 3

$U = RND(0,M)$
$V = RND(0,N)$

S21

$u1 = u0 \oplus U$
$v1 = v0 \oplus V$

S22

S23

$i=0$

S24

$SB1[i \oplus U] = SB0[i] \oplus V$

$i += 1$ — S25

N — $i > M ?$ — S26

Y

Ret. SB1, u1, v1

S27

S30

$u0=0, v0=0$    S31

CLL CPSB(SBX,u0,v0,SB1,u1,v1)

S32a

S32

$u0=u1, v0=v1, SB0=SB1$

CLL CPSB(SB0,u0,v0,SB1,u1,v1)

S33    $MD1 (=D1 \oplus u1)$    S34

$MSR1 = SB1[MD1]$

S35a    $u0=u1, v0=v1, SB0=SB1$

S35    CLL CPSB(SB0,u0,v0,SB1,u1,v1)

S36    $MD2 (=D2 \oplus u1)$    S37

$MSR2 = SB1[MD2]$

S38    $SR2 = MSR2 \oplus v1$

Fig. 4

Fig. 5

Fig. 6

CPS1(SB0,u0,v0,w0,SB1,u1,v1,w1)

**Fig. 7**

$$U = RND(0,M)$$
$$V = RND(0,N)$$
$$W = RND(0,Mx(M,N))$$

S41

$$u1 = u0 \oplus W \oplus U$$
$$v1 = v0 \oplus W \oplus V$$
$$w1 = w0 \oplus W$$

S42

i=0    S43

S44

$$SB1[i \oplus U] = SB0[i] \oplus V$$

i += 1    S45

N    i > M ?    S46

Y

Ret. SB1, u1, v1, w1

S47

S50

$$u0=0, v0=0, w0=0$$    S51

CLL CPS1(SBX,u0,v0,w0,SB1,u1,v1,w1)

$$u0=u1, v0=v1, w0=w1, SB0=SB1$$

S52a

CLL CPS1(SB0,u0,v0,w0,SB1,u1,v1,w1)

S53    S52    S54

MD1 (=D1⊕u1)

$$MSR1 = SB1[MD1 \oplus w1]$$

S55a    $$u0=u1, v0=v1, w0=w1, SB0=SB1$$

S55    CLL CPS1(SB0,u0,v0,w0,SB1,u1,v1,w1)

S56    MD2 (=D2⊕u1)    S57

$$MSR2 = SB1[MD2 \oplus w1]$$

S58    $$SR2 = MSR2 \oplus v1 \oplus w1$$

**Fig. 8**

CPS2(SB0,u0,v0,w0,z0,SB1,u1,v1,w1,z1)

$$U = RND(0,M)$$
$$V = RND(0,N)$$
$$W = RND(0,Mx(M,N))$$
$$Z = RND(0,Mx(M,N))$$

S61

$$u_1 = u_0 \oplus W \oplus U$$
$$v_1 = v_0 \oplus W \oplus V$$
$$w_1 = w_0 \oplus W \oplus Z$$
$$z_1 = z_0 \oplus Z$$

**Fig. 9**

S62

S63  i=0

S64  SB1[i⊕U] = SB0[i]⊕V

S65  i += 1

N   S66  i > M ?

Y

Ret. SB1,u1,v1,w1,z1

S67

S70

u0=0, v0=0, w0=0, z0=0   S71

CLL CPS2(SBX,u0,v0,w0,z0,SB1,u1,v1,w1,z1)

S72a

u0=u1,v0=v1,w0=w1,z0=z1, SB0=SB1

CLL CPS2(SB0,u0,v0,w0,z0,SB1,u1,v1,w1,z1)

S72

S73  MD1 (=D1⊕u1)   S74

MSR1 = SB1[MD1⊕w1⊕z1]

S75a  u0=u1,v0=v1,w0=w1,z0=z1, SB0=SB1

S75  CLL CPS2(SB0,u0,v0,w0,z0,SB1,u1,v1,w1,z1)

S76  MD2 (=D2⊕u1)   S77

MSR2 = SB1[MD2⊕w1⊕z1]

S78  SR2 = MSR2⊕v1⊕w1⊕z1

**Fig. 10**

CPS3(SB0,KT0,u0,v0,w0,SB1,KT1,u1,v1,w1)

U = RND(0,M)
V = RND(0,M)
W = RND(0,M)

S81

u1 = u0⊕W⊕U
v1 = v0⊕W⊕V
w1 = w0⊕W

S82

S83
i=0

S84
SB1[i⊕U] = SB0[i]⊕V

S85
i += 1

N    i > M ?    S86

Y

S87
j=0

S88
KT1[j] = KT0[j]⊕W

S89
j += 1

N    j > R ?    S90

Y

Ret. SB1, KT1, u1, v1, w1

S91

## Fig. 11

S93

u0=0, v0=0, w0=0

S94
CLL CPS3(SBX,KT,u0,v0,w0,SB2,KT2,u1,v1,w1)

S95a
u0=u1, v0=v1, w0=w1, SB0=SB2, KT1=KT2

CLL CPS3(SBX,KT1,u0,v0,w0,SB2,KT2,u1,v1,w1)

S95

S96    X1

S97
CX1 = CC3(X1,u1,v1,w1,KT2,SB2)

## Fig. 12

Fig. 13

Fig. 14

CPS4(SB0,KT0,u0,v0,w0,y0,SB1,KT1,u1,v1,w1,y1)

$U = RND(0,M)$
$V = RND(0,M)$
$W = RND(0,M)$
$Y = RND(0,M)$ — S101

$u_1 = u_0 \oplus W \oplus U$
$v_1 = v_0 \oplus Y \oplus V$
$w_1 = w_0 \oplus W$
$y_1 = y_0 \oplus Y$
S102

k=0 — S103

i=0 — S104

S105

$SB1[i \oplus E(U)[k],k] = SB0[i,k] \oplus P^{-1}(V)[k]$

S109        S106 — i += 1        i > ix ?    N    S107

N                                              Y

k > kx ?              k += 1

Y                                              S108

$KT1[0] = KT0[0] \oplus E(W)$
$KT1[R] = KT0[R] \oplus E(W)$ — S110

j=1 — S111

S112

$KT1[j] = KT0[j] \oplus E(T)$        S114

N

S113 — j += 1        j > R-1 ?

Y

S115 — Ret. SB1, KT1, u1, v1, w1, y1

Fig. 15

S120

u0=0,v0=0,w0=0,y0=0

S121

CLL CPS4(SBD,KTD,u0,v0,w0,y0,SB3,KT3,u1,v1,w1,y1)

S122a

u0=u1,v0=v1,w0=w1,y0=y1,SB0=SB3,KT1=KT3

CLL CPS4(SB0,KT1,u0,v0,w0,y0,SB3,KT3,u1,v1,w1,y1)

S122

S123    X1

S124

CX1 = CC5(X1,u1,v1,w1,y1,KT3,SB3)

## Fig. 16

HD

CT1

IOC    PRC    M1    M2    M3

CP2    RGN

## Fig. 18

Fig. 17

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- FR 1651443
- EP 1267514 A
- US 2001053220 A

### Non-patent literature cited in the description

- **KOUICHI ITOH.** *DPA Countermeasure Based on the Masking Method*
- **NICOLAS BRUNEAU.** *Multi-variate High-Order Attacks of Shuffled Tables Recomputation*
- *Advanced Encryption Standard FIPS PUB 197,* 26 November 2001
- *Data Encryption Standard (DES) FIPS PUB 46-3,* 25 October 1999
- Timing attacks on implementations of Diffie-Hellman, RSA, DSS, and other systems. **P. C. KOCHER.** Lecture Notes in Computer Science. Springer, 1996, vol. 1109, 104-113
- Differential Power Analysis. **P. C. KOCHER ; J. JAFFE ; B. JUN.** Lecture Notes in Computer Science. Springer, 1999, vol. 1666, 388-397
- Correlation Power Analysis with a Leakage Model. **E. BRIER ; C. CLAVIER ; F. OLIVIER.** Lecture Notes in Computer Science. Springer, 2004, vol. 3156, 16-29
- ElectroMagnetic Analysis (EMA): Measures and Counter-measures for Smart Cards. **J.-J. QUISQUATER.** Smart Card Programming and Security. Springer, 2001, vol. 2140, 200-210
- Template Attacks. **S. CHARI ; J. R. RAO ; P. ROHATGI.** CHES 2002. LNCS. Springer, 2003, vol. 2523, 172-186
- Mutual Information Analysis. **B. GIERLICHS ; L. BATINA ; P. TUYLS ; B. PRENEEL.** LNCS. Springer, 2008, vol. 5154, 426-442